# EUROPEAN PATENT APPLICATION

(11) **EP 4 685 619 A1**
(43) Date of publication of application: **28.01.2026**
(21) Application number: 25713497.3
(22) Date of filing: 25.03.2025
(51) Int. Cl.: G06F 3/0354, G06F 1/16, G01L 5/00

(54) **WEARABLE DEVICE AND METHOD FOR IDENTIFYING TOUCH INPUT AND PRESSURE INPUT**

(30) Priority: 12.06.2024 KR 20240076296; 01.07.2024 KR 20240086498; 10.07.2024 KR 20240091204
(71) Applicant: Samsung Electronics Co., Ltd, Suwon-si, Gyeonggi-do 16677 (KR)
(72) Inventor: KIM, Hongki, Suwon-si Gyeonggi-do 16677 (KR); LEE, Suyeon, Suwon-si Gyeonggi-do 16677 (KR); SHIM, Jaesung, Suwon-si Gyeonggi-do 16677 (KR)
(74) Representative: HGF
(86) International application number: PCT/KR2025/003826
(87) International publication number: WO 2025/258809

(57) **Abstract**

According to an embodiment, a method performed by a wearable device includes identifying, via a force sensor of the wearable device, an input depressing a second exterior surface of the wearable device with respect to a first exterior surface of the wearable device, the second exterior inclined relative to the first exterior surface. The method includes identifying, based on the input depressing the second exterior surface with respect to the first exterior surface, sensing data obtained via one of a plurality of touch sensors. The method includes, based on the sensing data within a reference range, performing a function related to the input. The method includes, based on the third sensing data out of the reference range, ignoring the input.

## Description

### [Technical Field]

The following descriptions relate to a wearable device and a method for identifying a touch input and a pressure input.

### [Background Art]

An electronic device may include a wearable device capable of being worn by a user. The wearable device may be worn on or partly inserted into a body part of the user. For example, the body part may include an ear part of the user. The wearable device may include at least one sensor. For example, the wearable device may obtain data using the at least one sensor.

The above-described information may be provided as a related art for the purpose of helping to understand the present disclosure. No claim or determination is raised as to whether any of the above-described information may be applied as a prior art related to the present disclosure.

### [Disclosure]

### [Technical Problem]

### [Technical Solution]

According to an embodiment, a wearable device may comprise a speaker and a housing. The housing may comprise a first housing part comprising the speaker, and at least partially received within an ear of a user of the wearable device, and a second housing part extending from the first housing part. The second housing part may comprise a first exterior surface including one or more protrusions, a second exterior surface including one or more protrusions and inclined relative to the first exterior surface of the second housing part, and a force sensor disposed in an interior space of the second housing part for identifying the second exterior surface that is depressed relative to the first exterior surface.

According to an embodiment, a method performed by a wearable device may comprise identifying, via a force sensor of the wearable device, an input depressing a second exterior surface of the wearable device with respect to a first exterior surface of the wearable device, the second exterior inclined relative to the first exterior surface. The method may comprise identifying, based on the input depressing the second exterior surface with respect to the first exterior surface, sensing data obtained via one of a plurality of touch sensors. The method may comprise, based on the sensing data within a reference range, performing a function related to the input. The method may comprise, based on the third sensing data out of the reference range, ignoring the input.

According to an embodiment, a non-transitory computer readable storage medium may store one or more programs. The one or more programs may include instructions which, when executed by at least one processor of a wearable device with a force sensor and a plurality of touch sensors, cause the wearable device to identify, via the force sensor, an input depressing a second exterior surface of the wearable device with respect to a first exterior surface of the wearable device, the second exterior inclined relative to the first exterior surface. The one or more programs may include instructions which, when executed by the at least one processor, cause the wearable device to identify, based on the input depressing the second exterior surface with respect to the first exterior surface, sensing data obtained via one of a plurality of touch sensors. The one or more programs may include instructions which, when executed by the at least one processor, cause the wearable device to, based on the sensing data within a reference range, perform a function related to the input. The one or more programs may include instructions which, when executed by the at least one processor, cause the wearable device to, based on the third sensing data out of the reference range, ignore the input.

### [Description of the Drawings]

FIG. 1 is a block diagram of an electronic device in a network environment according to various embodiments.
FIG. 2 illustrates an example of a simplified block diagram according to an embodiment.
FIG. 3A illustrates an example of a housing of a wearable device according to an embodiment.
FIG. 3B illustrates an exploded perspective view of a housing of a wearable device according to an embodiment.
FIG. 4 illustrates an example of an area for a touch input and an area for a pressure input, on an exterior surface of a wearable device according to an embodiment.
FIGS. 5A to 5C illustrate an example of a main FPCB according to an embodiment.
FIG. 6 illustrates an example of a structure of a wearable device for identifying a pressure input according to an embodiment.
FIG. 7 illustrates an example of a cross-sectional view cut along line A-A' of FIG. 4, according to an embodiment.
FIG. 8 is a flowchart illustrating an operation of a wearable device according to an embodiment.
FIG. 9 illustrates an example of an operation of a wearable device for classifying a pressure input and a touch input according to an embodiment.
FIG. 10 illustrates an example of an operation of a wearable device for classifying a pressure input and a touch input according to an embodiment.
FIG. 11 is a flowchart illustrating an operation of a wearable device according to an embodiment.
FIG. 12 illustrates an example of an operation of a wearable device for classifying a pressure input and a swipe input, according to an embodiment.
FIG. 13 illustrates an example of an operation of a wearable device for classifying a pressure input and a swipe input, according to an embodiment.
FIG. 14A illustrates an example of an operation of a wearable device according to a pressure input according to an embodiment.
FIG. 14B illustrates an example of an operation of a wearable device according to a swipe input according to an embodiment.

### [Mode for Invention]

Hereinafter, embodiments of the present disclosure will be described in detail with reference to the drawings so that those skilled in the art to which the present disclosure pertains may easily implement them. However, the present disclosure may be implemented in various different forms and is not limited to the embodiments described herein. In the description of the drawings, the same or similar reference numerals may be used for the same or similar components. In addition, in the drawings and related descriptions, well-known functions and configurations may be omitted for clarity and conciseness.

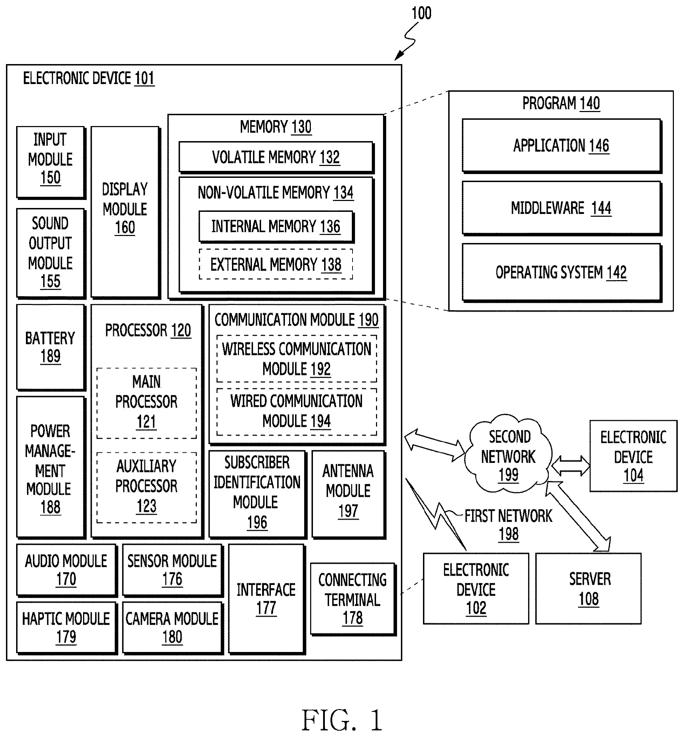

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, a wearable device may be connected with an electronic device (e.g., the electronic device 101). A wearable device (e.g., a true wireless stereo (TWS) device, an open wireless stereo (OWS) device, a headset, and/or a head-mounted device (HMD)) may be used to output audio signals. For example, the wearable device may be worn on a body part (e.g., an ear part or an ear canal part) of a user.

For example, the wearable device may use a sensor to identify whether an object in contact with (or adjacent to) the wearable device is a user's body part or a user's pocket (or an external object). For example, the wearable device may identify whether the wearable device is in contact with the user's body, by using a proximity sensor (or a skin proximity sensor or a skin sensor).

For example, the wearable device may operate based on the execution of a media application of the electronic device. The electronic device may obtain an audio signal based on the execution of the media application. The electronic device may transmit the audio signal to the wearable device. The wearable device may output the audio signal received from the electronic device.

While the wearable device outputs an audio signal, the wearable device may provide a function for controlling the media application. The wearable device may perform at least one of a play function, a play pause function, and/or a volume control function of the media application. For example, the above-described function may be provided using one or more touch sensors and one or more force sensors included in the wearable device. The wearable device may provide at least one area for identifying a touch input identified through one or more touch sensors and/or a pressure input identified using one or more force sensors. It will be appreciated that the wearable device may also identify a touch input and/or a pressure input while not outputting an audio signal, e.g. while in an idle mode, a standby state or a state of being powered-on but not outputting audio. For example, in such a state, the wearable device may identify a touch input and perform a corresponding function, such as a function for controlling the wearable device (e.g. changing a power state, answering a phone call, establishing a connection etc.).

For example, the wearable device may perform a function corresponding to a touch input and/or a pressure input. As an example, the wearable device may perform a media play (or play pause) function of a media application based on identifying a single touch input with respect to a specific area of the wearable device. As an example, the wearable device may activate (or deactivate) an active noise cancellation (ANC) function or deactivate (or activate) an ambient sound listening function based on identifying a long touch input with respect to a specific area of the wearable device. As an example, the wearable device may identify a swipe input with respect to a specific area of the wearable device. Based on a swipe input for a specific area of the wearable device, the wearable device may perform a function corresponding to the swipe input. For example, the wearable device may identify a pressure input with respect to a specific area of the wearable device. Based on identifying a pressure input with respect to a specific area, the wearable device may perform a function corresponding to the pressure input. As mentioned above, it will be appreciated that these examples of functions may not require the wearable device to be outputting audio when the touch input and/or pressure input is received.

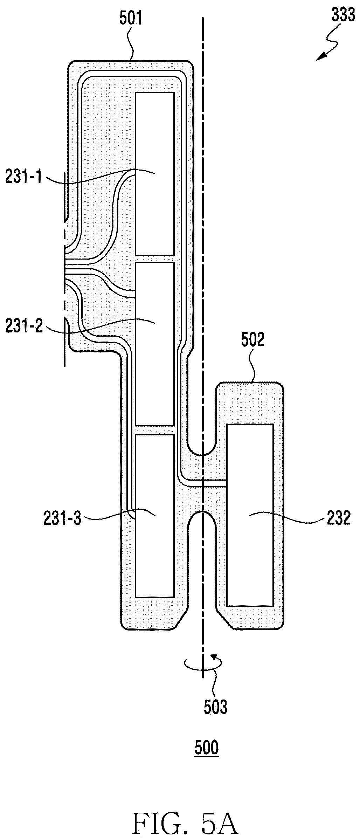

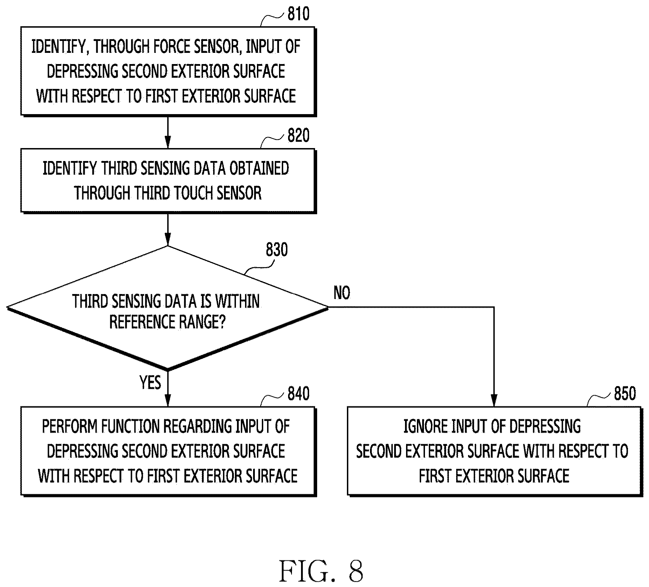

As described above, the wearable device may identify (or detect, receive, determine) a touch input and/or a pressure input. At least a portion of an area (or region) for identifying a touch input and at least a portion of an area (or region) for identifying a pressure input may overlap each other(e.g. being located or provided on a same part of the wearable device (e.g. the same region of a housing thereof). Accordingly, a method for identifying an identified input as one of a touch input and a pressure input may be required. In the following specification, a specific example for determining an input received from a user as one of a touch input and a pressure input will be described. In FIGS. 5A to 7, a structure of a wearable device for determining an input received from a user as one of a touch input and a pressure input will be described. In FIGS. 8 to 13, an example of an operation of a wearable device for determining an input received from a user as one of a touch input and a pressure input will be described.

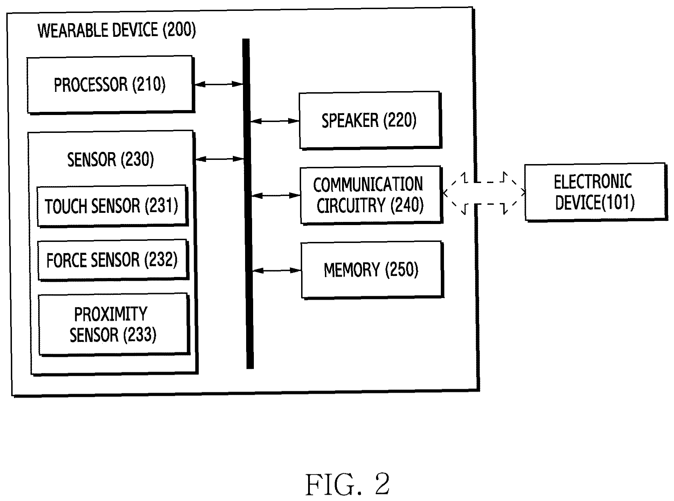

FIG. 2 illustrates an example of a simplified block diagram according to an embodiment.

Referring to FIG. 2, a wearable device 200 may be worn on a part of a user's body. A part of the user's body may include an ear part or an ear canal part. The wearable device 200 may be configured to be partly receivable in/on, or insertable into, an ear of a user.

For example, the wearable devices 200 may be referred to as earbuds, an earphone, or a true wireless stereo (TWS) device, and/or an open wireless stereo (OWS) device. According to an embodiment, the wearable device 200 may include a headset and/or a head-mounted device (HMD).

According to an embodiment, the wearable device 200 may be connected with the electronic device 101 of FIG. 1 based on a wired network and/or a wireless network. For example, the wired network may include a network such as the Internet, a local area network (LAN), a wide area network (WAN), or a combination thereof. For example, the wireless network may include a network such as long-term evolution (LTE), 5g new radio (NR), wireless fidelity (WiFi), Zigbee, near field communication (NFC), Bluetooth, Bluetooth low energy (BLE), or a combination thereof. The wearable device 200 may be directly connected with the electronic device 101 or indirectly connected through one or more routers and/or access points (APs). The wearable device 200 of FIG. 2 may be an example of an electronic device 102 connected with the electronic device 101 of FIG. 1.

According to an embodiment, the wearable device 200 may include a processor 210, a speaker 220, a sensor 230, communication circuitry 240, and/or memory 250. However, embodiments of the present disclosure are not limited thereto. For example, the processor 210, the speaker 220, the sensor 230, the communication circuitry 240, and/or the memory 250 may be electronically and/or operably connected with each other by a communication bus. Hereinafter, hardware components being operably coupled may mean that a direct or indirect connection between hardware components is established by wire or wirelessly so that a second hardware component among the hardware components is controlled by a first hardware component. Although illustrated based on different blocks, embodiments are not limited thereto, and a portion of the hardware components (e.g., a portion of the processor 210, the communication circuitry 240, and the memory 250) illustrated in FIG. 2 may be included in a single integrated circuit such as a system on a chip (SoC) or a system in package (SIP). A type and/or the number of hardware components included in the wearable device 200 is not limited as illustrated in FIG. 2. For example, the wearable device 200 may include only a portion of (e.g. one or more of) the hardware components illustrated in FIG. 2.

According to an embodiment, the processor 210 may correspond to the processor 120 of FIG. 1. The processor 210 may be operably coupled with or connected with the speaker 220, the sensor 230, the communication circuitry 240, and the memory 250. For example, the speaker 220, the sensor 230, the communication circuitry 240, and the memory 250 may be controlled by the processor 210.

According to an embodiment, the processor 210 may be formed of at least one processor. For example, the processor 210 may be formed of a main processor that performs high-performance processing and an auxiliary processor that performs low-power processing. The at least one processor may collectively or individually execute instructions (e.g. in the form of software or a computer program) to cause the wearable device 200 to perform one or more operations (e.g. any of the operations described herein).

According to an embodiment, the processor 210 may include a hardware component for processing data based on one or more instructions. For example, hardware components for processing data may include an arithmetic and logic unit (ALU), a field programmable gate array (FPGA), and/or a central processing unit (CPU).

For example, the processor 210 may include an application processor, a supplementary processor (e.g., a sensor hub, a microcontroller unit (MCU)), a central processor unit (CPU), a neural processing unit (NPU), a graphic processing unit (GPU), and/or a processor for IoT (e.g., a processor integrated with a communication module).

For example, the processor 210 may control an operation of the sensor 230 (or at least a portion of the sensor 230). For example, the processor 210 may include a processor for controlling an operation or a function of the sensor 230. The processor for controlling an operation or a function of the sensor 230 may be referred to as a sensor processor. In an example, the sensor processor may be implemented as a single processor 210.

For example, the processor 210 may include various processing circuits and/or multiple processors. For example, the term "processor" used in this document, including claims, may include various processing circuits including at least one processor, and one or more of the at least one processor may be configured to perform various functions described below individually and/or collectively in a distributed manner. As used hereinafter, when the terms "processor", "at least one processor", and "one or more processors" are described as being configured to perform various functions, these terms are not limited thereto, and include situations where a portion of the cited functions is performed by one processor and another portion of the cited functions is performed by other processor(s), and/or a situation where all the cited functions are performed by one processor. Additionally, the at least one processor may include a combination of processors performing enumerated/disclosed various functions in a distributed manner. The at least one processor may execute program instructions to achieve or perform the various functions.

According to an embodiment, the wearable device 200 may include a speaker 220 for outputting audio (or audio information (e.g., a voice signal, an audio signal)). For example, the speaker 220 may be used to output (or provide) sound. The processor 210 may receive an audio signal received from an external electronic device (e.g., the electronic device 101) and output the received sound signal through the speaker 220. For example, the speaker 220 may correspond to the sound output module 155 of FIG. 1.

For example, the wearable device 200 may include a nozzle used as a path of the audio information outputted from the speaker 220. For example, the nozzle may be referred to as an audio port, a conduit or an outlet. The nozzle may be a path or piece where the wearable device 200 is supported in a body part when the wearable device 200 is worn on the body part, and through which sound outputted from the wearable device 200 passes. For example, the nozzle may be connected to an ear tip. For example, the ear tip may indicate or be considered as a member in contact with the body part.

FIG. 2 illustrates the wearable device 200 that includes the speaker 220 outputting audio information, but the embodiment of the present disclosure is not limited thereto. For example, the wearable device 200 may include an actuator (or motor) for providing haptic feedback based on vibration.

According to an embodiment, the wearable device 200 may include a sensor 230. The sensor 230 may include at least one of a touch sensor 231, a force sensor 232, and/or a proximity sensor 233.

For example, the sensor 230 may include the touch sensor 231. For example, the touch sensor 231 may be configured to identify whether a touch is inputted (or received) based on a change in capacitance according to the approach of an external object. The touch sensor 231 may be configured to identify that a touch input is identified based on a change in capacitance exceeding a threshold value. For example, the touch sensor 231 may be configured with one or more touch sensors. Each of the one or more touch sensors may be configured to identify a touch input with respect to an area for identifying a touch input. For example, each of the one or more touch sensors may be associated with a different area for identifying a touch input by said one of the touch sensors, where some overlap between the different areas may be possible. Each of the one or more touch sensors may include at least one electrode disposed in a portion related to a corresponding area (e.g. an area corresponding to said touch sensor, or the area for identifying a touch input by said touch sensor).

As an example, the wearable device 200 may include three touch sensors. Among the three touch sensors, a first touch sensor may be configured to identify a touch input (or a change in capacitance according to the approach of an external object, which may not require physical contact) in a first area (or a first touch-sensing area, or first sensing area). The first touch sensor may include at least one electrode for identifying a touch input on the first area. A second touch sensor may be configured to identify a touch input (or a change in capacitance according to the approach of an external object, which may not require physical contact) in a second area (or a second touch-sensing area, or second sensing area). The second touch sensor may include at least one electrode for identifying a touch input on the second area. A third touch sensor may be configured to identify a touch input (or a change in capacitance according to the approach of an external object which may not require physical contact) in a third area (or a third touch-sensing area, or third sensing area). The third touch sensor may include at least one electrode for identifying a touch input on the third area.

For example, the sensor 230 may include a force sensor 232. The force sensor 232 may be disposed inside a housing of the wearable device 200. The force sensor 232 may be used to identify that a second exterior surface of the housing is depressed (or pressed) with respect to a first exterior surface of the housing. That is, the force sensor 232 may be used to identified (e.g. may be configured to identify) that one of a first exterior surface of the housing and a second exterior surface of the housing is depressed (or pressed) with respect to the other one of the first exterior surface of the housing or the second exterior surface of the housing. For example, a force sensor 232 may include an electric force sensor, a piezoelectric force sensor, an optical force sensor, and/or a capacitive force sensor. For example, the force sensor 232 may be configured to identify a pressure input based on a housing that is deformed according to extoernal pressure.

For example, the sensor 230 may include a proximity sensor 233. The proximity sensor 233 may be used to detect wearing of the wearable device 200. For example, the proximity sensor 233 may include light-emitting diodes for emitting multiple infrared rays and light-receiving diodes for receiving lights related to the infrared rays to identify a location of the wearable device 200. For example, the proximity sensor 233 may identify the approach of the user's skin. The proximity sensor 233 may include a skin sensor for identifying the approach of the user's skin. According to various embodiments, the sensor 230 may comprise three touch sensors, a force sensor 232 and a proximity sensor 233.

According to an embodiment, when the wearable device 200 is worn by the user, the proximity sensor 233 (e.g., skin sensor) may be disposed to be in contact with (or close to) a part of the user's body. For example, the proximity sensor 233 may be used to identify whether at least a portion of the wearable device 200 is in contact with a portion of the user's body. Whether the wearable device 200 is worn by the user may be identified based on whether at least a portion of the wearable device 200 is in contact with a portion of the user's body. For example, the wearable device 200 may identify contact with a portion of the user's body based on data received from the proximity sensor 233. The wearable device 200 (or the processor 210) may activate at least a portion of the sensors 230 (e.g. one or more of the touch sensor(s) 231 and force sensor 232), based on identifying that the wearable device 200 is worn by the user.

Although not illustrated, the sensor 230 may include an acceleration sensor. The acceleration sensor may be used to identify a change in acceleration of the wearable device 200. For example, the acceleration sensor may identify (or measure or detect) the acceleration of the wearable device 200 in three directions of the x-axis, y-axis, and z-axis.

FIG. 2 describes examples of the sensor 230 included in the wearable device 200, but the embodiment of the present disclosure is not limited thereto. For example, the wearable device 200 may further include a barometer for measuring external air pressure of the wearable device 200, a heart rate monitor (HRM) for measuring pulse, an electrocardiogram (ECG), and a bioelectrical impedance analysis (BIA).

According to an embodiment, the wearable device 200 may include communication circuitry 240. The communication circuitry 240 may correspond to at least a portion of the communication module 190 of FIG. 1. For example, the communication circuitry 240 may be used for various radio access technologies (RATs). For example, the communication circuitry 240 may be used to perform Bluetooth communication, wireless local area network (WLAN) communication, Zigbee communication, near field communication (NFC), ultra wide band (UWB) communication, UWB communication, or ANT+ communication. For example, the communication circuitry 240 may be used to perform cellular communication.

According to an embodiment, the wearable device 200 may include memory 250. The memory 250 may be used to store information or data. For example, the memory 250 may be used to store data received from the electronic device 101. For example, the memory 250 may correspond to the memory 130 of FIG. 1. For example, the memory 250 may be a volatile memory unit or units. For example, the memory 250 may be a non-volatile memory unit or units. For example, the memory 250 may be a different type of computer-readable medium, such as a magnetic or optical disk. For example, the memory 250 may store data obtained based on an operation 210 (e.g., an algorithm execution operation) performed by the processor. According to embodiments, the memory 250 may be configured in an integrated form with the processor 210.

According to an embodiment, one or more instructions (or commands) that indicate operation and/or calculation to be performed on data by the processor 210 of the wearable device 200 (e.g. performed collectively or individually by at least one processor of the wearable device 200) may be stored in the memory 250. A set of one or more instructions may be referred to as a program, a firmware, an operating system, a process, a routine, a sub-routine, and/or an application. Hereinafter, an application being installed in an electronic device (e.g., the wearable device 200) may mean that one or more instructions provided in a form of an application are stored in the memory, and that the one or more applications are stored in a format executable by a processor of the electronic device (e.g., a file having an extension specified by an operating system of the wearable device 200). According to an embodiment, the wearable device 200 may execute one or more instructions stored in the memory to perform operations of the wearable device 200 described below. For example, the one or more instructions, when executed by the processor 210, may cause the wearable device 200 to perform at least a portion of the operations of the wearable device 200 described below.

Although not illustrated in FIG. 2, according to an embodiment, the wearable device 200 may include a microphone for obtaining a sound (e.g., a voice signal) inputted from the outside of the wearable device 200. For example, the microphone may include a plurality of microphones. The microphone may include an internal microphone and an external microphone that are identified based on a direction in which a voice signal is obtained. For example, the internal microphone may include at least one microphone for obtaining a voice signal from a direction toward the user's mouth while the wearable device 200 is worn on a part of the user's body. For example, the external microphone may include at least one microphone for obtaining a voice signal from a direction different the direction toward the user's mouth while the wearable device 200 is worn on a part of the user's body. For example, the microphone may be an electronic condenser microphone (ECM) or a micro electro mechanical system (MEMS), but it is not limited thereto. The microphone, or a function associated therewith, may also be controllable via an input received by a touch sensor 231, a force sensor 232 and/or a proximity sensor 233 of the sensor 230,

Although not illustrated in FIG. 2, according to an embodiment, the wearable device 200 may include a module for power supply. For example, the wearable device 200 may include a battery. The battery included in the wearable device 200 may correspond to the battery 189 of FIG. 1.

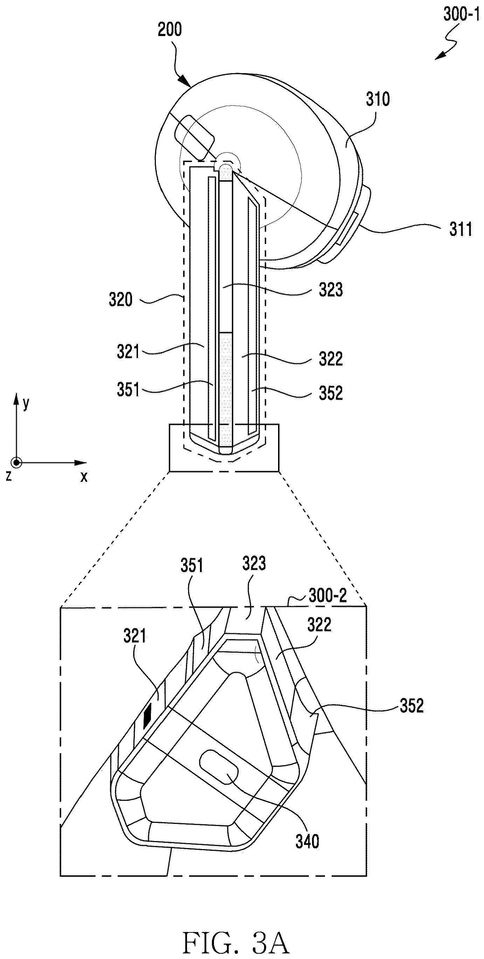

FIG. 3A illustrates an example of a housing of a wearable device, according to an embodiment.

FIG. 3A illustrates an example of the wearable device 200 of FIG. 2. An example 300-1 of FIG. 3A illustrates an example of at least a portion of a housing of the wearable device 200 shown when the wearable device 200 of FIG. 2 is viewed from the +z direction. An example 300-2 of FIG. 3A illustrates an example of at least a portion of a housing of the wearable device 200 shown when the wearable device 200 of FIG. 2 is viewed from the -y direction.

For example, the wearable device 200 may include a housing forming an exterior of the wearable device 200. For example, the housing may include a first housing part 310 and a second housing part 320. For example, the first housing part 310 may include a part to be worn on or in a user's body part when the wearable device 200 is worn on the user's body part (e.g., an ear part or an ear canal part) or in-use. For example, the first housing part 310 may include a speaker 220. For example, the first housing part 310 may be at least partially received in the user's ear.

For example, the second housing part 320 may include a part, which is fastened (or coupled, connected, joined) to the first housing part 310 and extends from the first housing part 310. For example, the first housing part 310 may be referred to as a first case or a rear housing. For example, the second housing part 320 may be referred to as a second case or a front housing.

The wearable device 200 may include a nozzle 311 included in the first housing part 310. For example, the nozzle 311 may may indicate, define or include a portion (e.g. a channel, a chamber, a conduit), which is used as a path for audio information outputted from a speaker (e.g., the speaker 220 of FIG. 2) included in the housing of the wearable device 200 and is contacted with a part of the user's body (or contacted with a portion connected to an ear tip contacted with a part of the user's body).

For example, the wearable device 200 may include the second housing part 320 extending from the first housing part 310. For example, the second housing part 320 may be referred to as a stem portion. For example, the second housing part 320 may include a portion extending in a first direction (e.g., -y axis direction) from the first housing part 310. For example, the second housing part 320 may include a touch sensor 231 and/or a force sensor 232.

For example, the second housing part 320 may include a first exterior surface 321, a second exterior surface 322, and a third exterior surface 323. The second exterior surface 322 may be inclined with respect to the first exterior surface 321. The third exterior surface 323 may connect the first exterior surface 321 and the second exterior surface 322. The third exterior surface 323 may be inclined with respect to the first exterior surface 321 and the second exterior surface 322. For example, the first exterior surface 321 and the second exterior surface 322 may not be parallel to each other. The second exterior surface 322 and the third exterior surface 323 may not be parallel to each other. The first exterior surface 321 and the third exterior surface 323 may not be parallel to each other.

For example, the first exterior surface 321 may include one or more protrusions (or one or more ribs, ridges, raised areas, bumps). The second exterior surface 322 may include one or more protrusions (or one or more ribs). For example, the first exterior surface 321 may include a protrusion 351. The second exterior surface 322 may include a protrusion 352. For example, the protrusion 351 and the protrusion 352 may be disposed to guide a touch input and/or a pressure input of the user. For example, the protrusion 351 and the protrusion 352 may be formed along a first direction in which the second housing part 320 extends from the first housing part 310. For example, the protrusion 351 may be formed as an embossed protrusion (or an engraved protrusion). For example, the protrusion 352 may be formed as an engraved protrusion (or an embossed protrusion).

For example, one or more protrusions (e.g., the protrusion 351) disposed on the first exterior surface 321 (or included in the first exterior surface 321) and one or more protrusions (e.g., the protrusion 352) disposed on the second exterior surface 322 may be disposed to increase friction with the user's finger. For example, in a state where one of the user's fingers (e.g., index finger) is in contact with the first exterior surface 321, and another of the user's fingers (e.g., thumb) is in contact with the second exterior surface 322, the user of the wearable device 200 may perform a pressure input. For example, the wearable device 200 may identify that the user uses the first exterior surface 321 and the second exterior surface 322 to squeeze (or push or press) the second housing part 320. According to a squeeze operation on the second housing part 320, the second exterior surface 322 may be depressed with respect to the first exterior surface 321 (e.g. the second exterior surface 322 may be depressed in a direction of the first exterior surface 322 or moved towards the first exterior surface 322). For example, the wearable device 200 may identify an input in which the second exterior surface 322 is depressed with respect to the first exterior surface 321 by using the force sensor 232, and identify a pressure input based on identifying that the input is released by using the force sensor 232. In some examples, the second exterior surface 322 being depressed with respect to the first exterior surface 321 may refer to the second exterior surface 322 experiencing a force inwards, towards the first exterior surface 321, due to the squeeze operation.

For example, the wearable device 200 (or the processor 210 of the wearable device 200) may identify a touch input on the first exterior surface 321 using the touch sensor 231. The wearable device 200 may identify a swipe input moved on the first exterior surface 321 in either a first direction (e.g., -y direction) or a second direction (e.g., +y direction).

The arrangement structure of the force sensor 232 and the touch sensor 231 for identifying the above-described pressure input and swipe input (or touch input or drag input) will be described later in FIGS. 5A to 7.

For example, at least a portion of the third exterior surface 323 may include a light emitting unit (e.g., LED). The light emitting unit may be configured to emit light (e.g., visible light) in at least the z direction.

In an embodiment, the third exterior surface 323 may be omitted, and the first exterior surface 321 and the second exterior surface 322 may be directly connected to each other.

Referring to an example 300-2, the second exterior surface 322 may be inclined with respect to the first exterior surface 321. The first exterior surface 321 and the second exterior surface may be configured as a plane. For example, each of the first exterior surface 321 and the second exterior surface 322 may define a plane. One or more protrusions (e.g., the protrusion 351) may be formed on at least a portion of the first exterior surface 321 in a first direction (e.g., the -y direction). One or more protrusions (e.g., the protrusion 352) may be formed on at least a portion of the second exterior surface 322 in the first direction (e.g., the -y direction).

For example, the second housing part 320 may include a charging terminal 340. The charging terminal 340 may include an electronic connector (or a conductive terminal) for electrically connecting to a conductive pin (e.g., pogo pin).

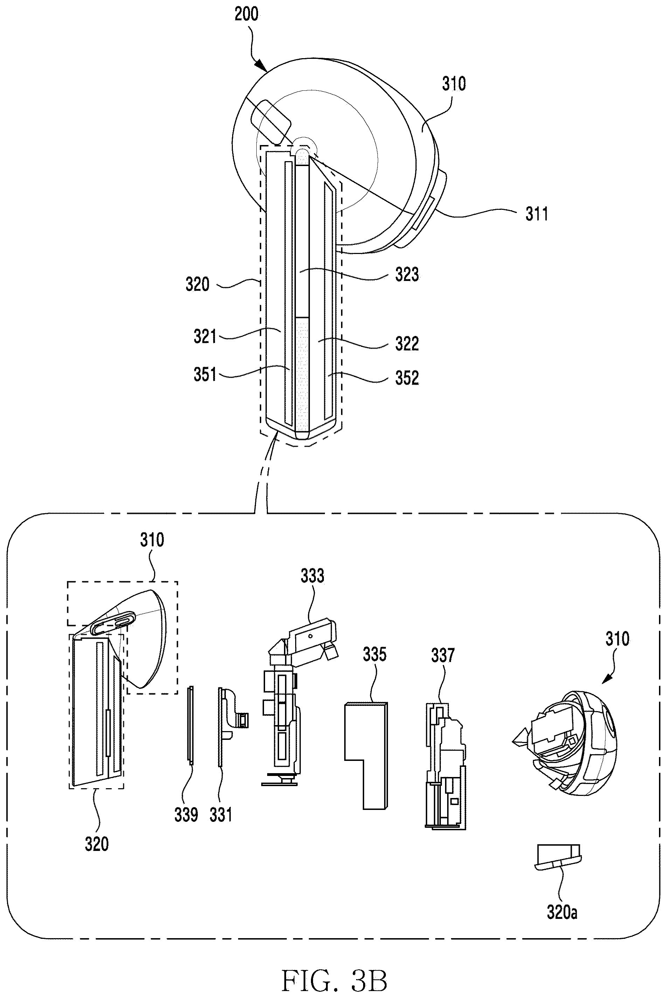

FIG. 3B illustrates an exploded perspective view of a housing of a wearable device according to an embodiment.

FIG. 3B illustrates an example of an exploded perspective view of the second housing part 320 of the wearable device 200 of FIG. 3A.

For example, the second housing part 320 may include a light emitting unit 339, a flexible printed circuit board (FPCB) 331 (or sub-FPCB 331) that supports the light emitting unit 339, a main FPCB 333, a system in package (SIP) 335, and/or a bracket 337.

For example, the second housing part 320 may include a bracket 337 for supporting hardware components included in the wearable device 200. For example, the SIP 335 and the main FPCB 333 may be disposed on the bracket 337. For example, the SIP 335 may include the processor 210 of FIG. 2. For example, the SIP 335 may include the communication circuitry 240 of FIG. 2. For example, the SIP 335 may include the memory 250 of the wearable device 200. For example, the processor 210, the communication circuitry 240, and the memory 250 may be configured as a single package (e.g., the SIP 335). For example, the processor 210, the communication circuitry 240, and the memory 250 may be included in the SIP 335.

For example, the second housing part 320 may include a main FPCB 333 in which hardware components and/or other circuits such as FPCB 331 are disposed. For example, the FPCB 331 may be disposed on the main FPCB 333.

For example, the FPCB 331 and the main FPCB 333 may be used to connect (or connect electrically) the light emitting unit 339 and the SIP 335. For example, the light emitting unit 339 may be disposed on the FPCB 331. For example, the light emitting unit 339 may be disposed on the FPCB 331, thereby being disposed along the first direction (e.g., -y direction) on the third exterior surface 323 of the second housing part 320. For example, the light emitting unit 339 may be visually recognized by the user from the outside of the second housing part 320 (or the outside of the wearable device 200). As described above, the light emitting unit 339 is optional, the FPCB 331 may therefore also be optional.

For example, the second housing part 320 may further include a port 320a for charging. For example, the port 320a may be disposed (or formed) at an end of the second housing part 320. For example, the port 320a may include a charging terminal (e.g., the charging terminal 340 of FIG. 3A). Although FIG. 3B illustrates a port 320a for wired charging of a battery (not illustrated) of the wearable device 200, the present disclosure is not limited thereto. For example, the wearable device 200 (or the second housing part 320) may further include a coil (or antenna) for wireless charging, or include it instead of the port 320a.

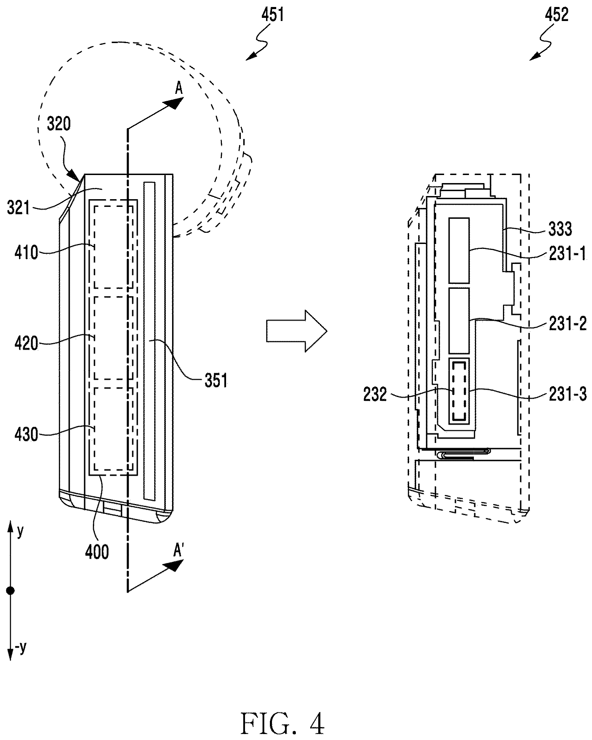

FIG. 4 illustrates an example of an area for a touch input and an area for a pressure input, on an exterior surface of a wearable device, according to an embodiment.

FIGS. 5A to 5C illustrate an example of a main FPCB according to an embodiment.

Referring to FIG. 4, an example 451 illustrates an example of a first exterior surface 321 of the wearable device 200. An example 452 is an example of the first exterior surface 321 viewed from above (e.g. an interior view). In the example 452, the first exterior surface 321 of the second housing part 320 may correspond to a first layer. A main FPCB 333 may correspond to a second layer below the first layer. In example 452, the first layer is illustrated by a dotted line. The second layer is illustrated by a solid line.

According to an embodiment, the wearable device 200 may provide an area 400 (or region 400, or portion 400) for a touch input on the first exterior surface 321. For example, the area 400 for touch input may be formed along a first direction (e.g., +y direction) and/or may extend in a second direction (e.g. perpendicular to the +y direction).

A touch sensor 231 may be configured to identify a touch input on the area 400 for a touch input among the first exterior surface 321. For example, the touch sensor 231 may include a first touch sensor 231-1, a second touch sensor 231-2, and a third touch sensor 231-3. The first touch sensor 231-1 may be configured to identify a touch input on a first area 410 of the area 400. The second touch sensor 231-2 may be configured to identify a touch input on a second area 420 of the area 400. The third touch sensor 231-3 may be configured to identify a touch input on a third area 430 of the area 400. FIG. 4 illustrates an example in which the wearable device 200 includes three touch sensors 231-1, 231-2, and 231-3, but is not limited thereto. The wearable device 200 may include one or more touch sensors. Each touch sensor of the one or more touch sensors may have a corresponding area in which said touch sensor can identify a touch.

According to an embodiment, a force sensor 232 may be used to identify a pressure input for at least a portion of the area 400. For example, the force sensor 232 may be used to identify a pressure input for the third area 430. For example, the force sensor 232 may be used to identify a pressure on at least a portion of the second area 420 and the third area 430.

Referring to the example 452, the first touch sensor 231-1, the second touch sensor 231-2, and the third touch sensor 231-3 may be disposed on the main FPCB 333. At least a portion of the main FPCB 333 may be folded. The main FPCB 333 may be positioned in the second housing part 320 in a folded state.

According to an embodiment, the main FPCB 333 may be divided into a first part and a second part, based on a folding axis. The first touch sensor 231-1, the second touch sensor 231-2, and the third touch sensor 231-3 may be disposed on the first part. The force sensor 232 may be disposed on the second part. The first part may correspond to an unfolded portion of the main FPCB 333 and the second part may correspond to a folded portion of the main FPCB 333.

In the unfolded main FPCB 333, the first touch sensor 231-1, the second touch sensor 231-2, the third touch sensor 231-3, and the force sensor 232 may be disposed as shown in FIGS. 5A to 5C. That is, in various examples, in a case where the main FPCB 333 is not folded, the first touch sensor 231-1, the second touch sensor 231-2, the third touch sensor 231-3, and the force sensor 232 may be disclosed as shown in any of FIGS. 5A to 5C, ignoring the folding axis indicated in each drawing.

Referring to FIG. 5A, an example 500 may represent a portion of the main FPCB 333. The main FPCB 333 may be folded based on a folding axis 503. The folded main FPCB 333 may be disposed in the second housing part 320. The folded main FPCB 333 may be disposed in the second housing part 320 such that the first touch sensor 231-1, the second touch sensor 231-2, and the third touch sensor 231-3 are substantially parallel to the first exterior surface 321. For example, the first touch sensor 231-1, the second touch sensor 231-2, and the third touch sensor 231-3 may be disposed toward an inner surface opposite to the first exterior surface 321. For example, the inner surface may be on a rear side of the first exterior surface 321, i.e. the inner surface being an internal or interior surface of the second housing part 320 or, more generally, the wearable device 200.

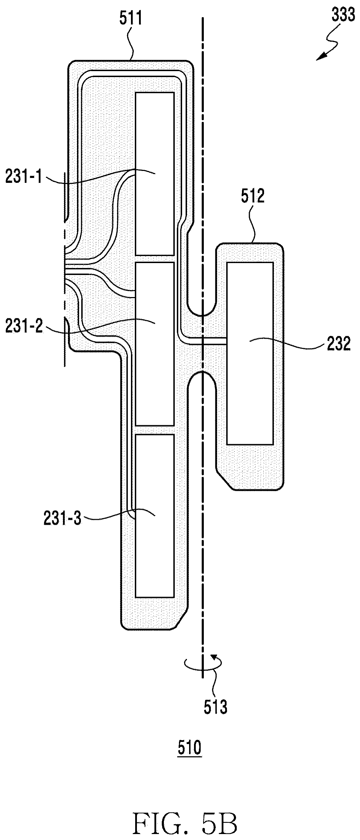

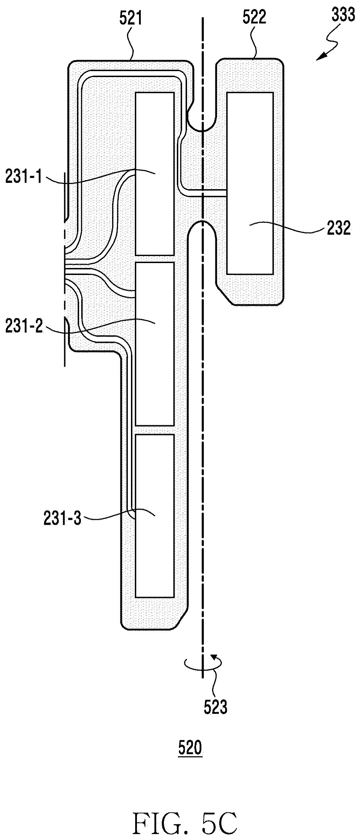

For example, the main FPCB 333 may include a first part 501 and a second part 502. The first touch sensor 231-1, the second touch sensor 231-2, and the third touch sensor 231-3 may be disposed in the first part 501. The first touch sensor 231-1, the second touch sensor 231-2, and the third touch sensor 231-3 may be disposed on substantially the same plane. For example, a surface of each of the first touch sensor 231-1, the second touch sensor 231-2, and the third touch sensor 231-3 (such as the surface nearest to or facing the inner surface, or the surface furthest from or facing away from the inner surface) may be disposed on substantially the same plane, or may be positioned a same (or similar) depth from the inner surface (or from the second exterior surface 321) within the second housing part 320. The force sensor 232 may be disposed in the second part 502. As the main FPCB 333 is folded with respect to the folding axis 503, the third touch sensor 231-3 and the force sensor 232 may be parallel to each other, and the third touch sensor 231-3 and the force sensor 232 may face each other. That is, the folding of the main FPCB 333 may have the effect of providing the second part 502 above or below the first part 501, and may result in the second part 502 being parallel with the first part 501. In an example, the main FPCB 333 may undergo a rotation of approximately 180 degrees across a region at the folding axis 503, so as to bend-back (or fold back) the second part 503 towards the first part 501. Similar description may apply for FIG. 5B and FIG. 5C also.

For example, the force sensor 232 disposed in the main FPCB 333 may identify a pressure input for the third area 430 of FIG. 4.

Referring to FIG. 5B, an example 510 may represent a portion of the main FPCB 333. The main FPCB 333 may be folded based on a folding axis 513. The folded main FPCB 333 may be disposed in the second housing part 320. The folded main FPCB 333 may be disposed in the second housing part 320 such that the first touch sensor 231-1, the second touch sensor 231-2, and the third touch sensor 231-3 are substantially parallel to the first exterior surface 321. For example, the first touch sensor 231-1, the second touch sensor 231-2, and the third touch sensor 231-3 may be disposed toward an inner surface opposite to the first exterior surface 321.

For example, the main FPCB 333 may include a first part 511 and a second part 512. The first touch sensor 231-1, the second touch sensor 231-2, and the third touch sensor 231-3 may be disposed in the first part 511. The first touch sensor 231-1, the second touch sensor 231-2, and the third touch sensor 231-3 may be disposed on substantially the same plane. The force sensor 232 may be disposed in the second part 512. As the main FPCB 333 is folded with respect to the folding axis 513, the second touch sensor 231-2 and the force sensor 232 may be parallel to each other, and the second touch sensor 231-2 and the force sensor 232 may face each other.

For example, the force sensor 232 disposed in the main FPCB 333 may identify a pressure input for the second area 420 of FIG. 4.

Referring to FIG. 5C, an example 520 may represent a portion of the main FPCB 333. The main FPCB 333 may be folded based on a folding axis 523. The folded main FPCB 333 may be disposed in the second housing part 320. The folded main FPCB 333 may be disposed in the second housing part 320 such that the first touch sensor 231-1, the second touch sensor 231-2, and the third touch sensor 231-3 are substantially parallel to the first exterior surface 321. For example, the first touch sensor 231-1, the second touch sensor 231-2, and the third touch sensor 231-3 may be disposed toward an inner surface opposite to the first exterior surface 321.

For example, the main FPCB 333 may include a first part 521 and a second part 522. The first touch sensor 231-1, the second touch sensor 231-2, and the third touch sensor 231-3 may be disposed in the first part 521. The first touch sensor 231-1, the second touch sensor 231-2, and the third touch sensor 231-3 may be disposed on substantially the same plane. The force sensor 232 may be disposed in the second part 522. As the main FPCB 333 is folded with respect to the folding axis 523, the first touch sensor 231-1 and the force sensor 232 may be parallel to each other, and the first touch sensor 231-1 and the force sensor 232 may face each other.

For example, the force sensor 232 disposed in the main FPCB 333 may identify a pressure input for the first area 410 of FIG. 4.

FIGS. 5A to 5C described above illustrate an example in which the force sensor 232 faces one of the first touch sensors 231-1 to the third touch sensors 231-3 when the main FPCB 333 is folded, but is not limited thereto. For example, in the example 500, when the main FPCB 333 is folded, the force sensor 232 may face at least a portion of the third touch sensor 231-3 and at least a portion of the second touch sensor 231-2 (e.g. portion(s) of two (or more) of the touch sensors). It will also be appreciated that, in various examples, the naming or numbering of the touch sensors is such that the touch sensor facing the force sensor is termed the third touch sensor 231-3 (i.e. the touch sensors are not named sequentially based on position, but instead the third touch sensor is that which faces the force sensor and the remaining touch sensor(s) are then arbitrarily termed the first touch sensor and the second touch sensor).

In the following specification, for convenience of explanation, an example in which the main FPCB 333 is formed as illustrated in FIG. 5A will be described. However, it is not limited thereto.

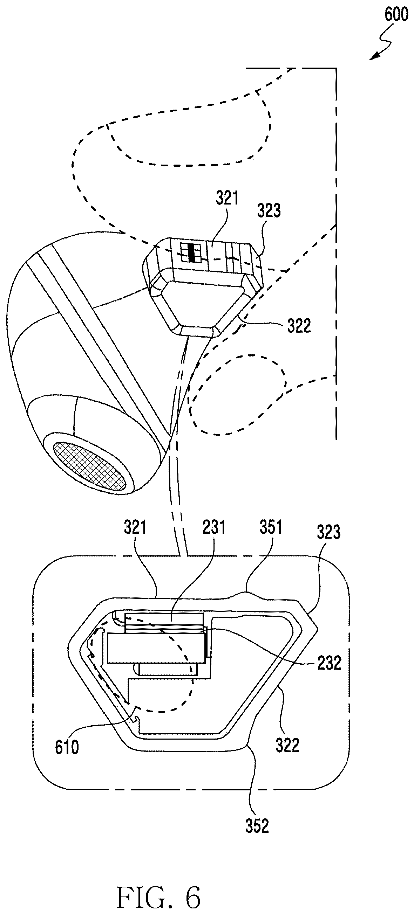

FIG. 6 illustrates an example of a structure of a wearable device for identifying a pressure input according to an embodiment.

Referring to FIG. 6, an example 600 illustrates an example in which a user of the wearable device 200 performs a pressure input. The example 600 is a diagram of the wearable device 200 of FIG. 3A when viewed from a -y axis.

According to an embodiment, at least a portion of the user's first digit (e.g., thumb) may contact a first exterior surface 321. At least a portion of the user's second digit (e.g., index finger) may contact a second exterior surface 322. For example, the first digit may be fixed or guided by a protrusion 351. The second digit may be fixed or guided by a protrusion 352.

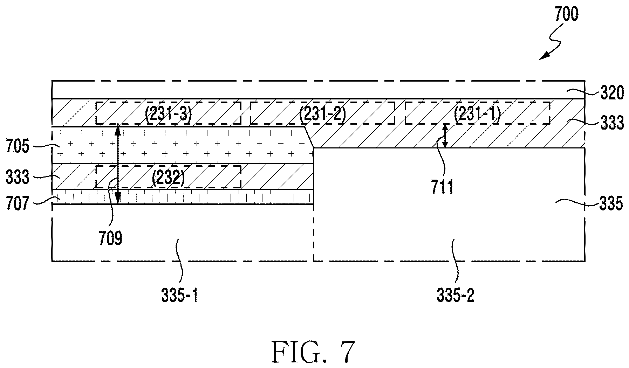

The user of the wearable device 200 may squeeze (or push or press) the wearable device 200 using the first digit and the second digit. According to the user's squeeze operation, the second exterior surface 322 may be depressed with respect to the first exterior surface 321. According to the user's squeeze operation, the first exterior surface 321 may be depressed with respect to the second exterior surface 322. According to the user's squeeze operation, a size of a space 610 may be reduced (e.g. space 610 may be compressed based on the user's squeeze operation). According to the user's squeeze operation, a portion forming the space 610 may be deformed. For example, an elastic member (e.g., the elastic member 705 of FIG. 7) among portions forming the space 610 may be deformed according to the user's squeeze operation. According to the deformation of the elastic member (e.g., the elastic member 705 of FIG. 7), the force sensor 232 (or the first touch sensor 231-1) may detect deformation of a portion forming the space 610. As the user's squeeze operation is released, the deformed portion may return to its original state.

For example, the second housing part 320 may include an elastic member such that the deformed portion returns to its original state. For example, the elastic member may be disposed between the touch sensor 231 (e.g., the first touch sensor 231-1, the second touch sensor 231-2, and the third touch sensor 231-3) and the force sensor 232. The arrangement structure of the touch sensor 231, the elastic member, and the force sensor 232 will be described later in FIG. 7.

FIG. 7 illustrates an example of a cross-sectional view cut along line A-A' of FIG. 4, according to an embodiment.

Referring to FIG. 7, a second housing part 320 may be exposed to the outside. The second housing part 320 may be disposed at the uppermost end of the cross-section. A first part (e.g., a first part 501 of FIG. 5A) of the main FPCB 333 may be disposed under the second housing part 320. An elastic member 705 may be disposed below at least a portion of the first part of the main FPCB 333. A second part 335-2 of the SIP 335 may be disposed below at least another portion of the first part of the main FPCB 333.

For example, the main FPCB 333 may be foldable based on a folding axis (e.g., the folding axis 503 of FIG. 5A). The main FPCB 333 may be divided into a first part and a second part (e.g., the second part 502 of FIG. 5A) based on the folding axis. In a state in which the main FPCB 333 is folded, a space may be formed between the first part and the second part. The elastic member 705 may be disposed in the space.

For example, the elastic member 705 may include a compressible member. For example, the elastic member 705 may include at least one of Poron, rubber, and silicon.

For example, an adhesive member 707 may be disposed between the second part of the main FPCB 333 and the first part 335-1 of the SIP 335. For example, the adhesive member 707 may include at least one of a double-sided tape, a pressure sensitive adhesive (PSA), and/or an optical clear adhesive (OCA). For example, the second part of the main FPCB 333 is bonded or adhered to the first part 335-1 of the SIP 335.

According to an embodiment, the first touch sensor 231-1, the second touch sensor 231-2, and the third touch sensor 231-3 may be disposed on the first part of the main FPCB 333. For example, the first touch sensor 231-1, the second touch sensor 231-2, and the third touch sensor 231-3 (e.g. a top surface or a sensing surface thereof) may be disposed on substantially the same plane, e.g. are aligned in a single layer.

For example, a first distance 709 between the first part 335-1 of the SIP 335 and a plane on which the first touch sensor 231-1, the second touch sensor 231-2, and the third touch sensor 231-3 are disposed may be greater than a second distance 711 between the second part 335-2 of the SIP 335 and the plane. For example, the second part 335-2 of the SIP 335 may be positioned closed to the touch sensor(s) than the first part 335-1 of the SIP 335.

According to an embodiment, deformation of the second housing part 320 may occur by a user's squeeze operation on an area (e.g., the third area 430 of FIG. 4) related to the third touch sensor 231-3 and the force sensor 232. The elastic member 705 may be compressed according to the deformation of the second housing part 320. As the elastic member 705 is compressed, the first distance 709 may be decreased. The force sensor 232 may identify a user's pressure input based on the decrease in the first distance 709. As described above, in an area related to the third touch sensor 231-3 and the force sensor 232, since the second housing part 320 may be deformed (e.g. is deformable), a groove may not be formed in the exterior housing (e.g. the exterior housing may provide a continuous surface or a surface without indentation).

As described above, one or more touch sensors (e.g., the first touch sensor 231-1, the second touch sensor 231-2, or the third touch sensor 231-3) and the force sensor 232 may be included in the second housing part 320 of the wearable device 200. In the following specification, an example of an operation of the wearable device 200 including three touch sensors and the force sensor 232 will be described. As described above, an area (e.g., the third area 430 of FIG. 4) for identifying a pressure input through the force sensor 232 and an area (e.g., the area 400 of FIG. 4) for identifying a touch input (or a swipe input) through one or more touch sensors may overlap each other. Therefore, a function for classifying an input identified on the overlapping area into one of a touch input and a pressure input may be required. Therefore, in the following specification, an operation of the wearable device 200 for identifying an input received from the user as one of a touch input (or a swipe input) and a pressure input will be described.

FIG. 8 is a flowchart illustrating an operation of a wearable device according to an embodiment.

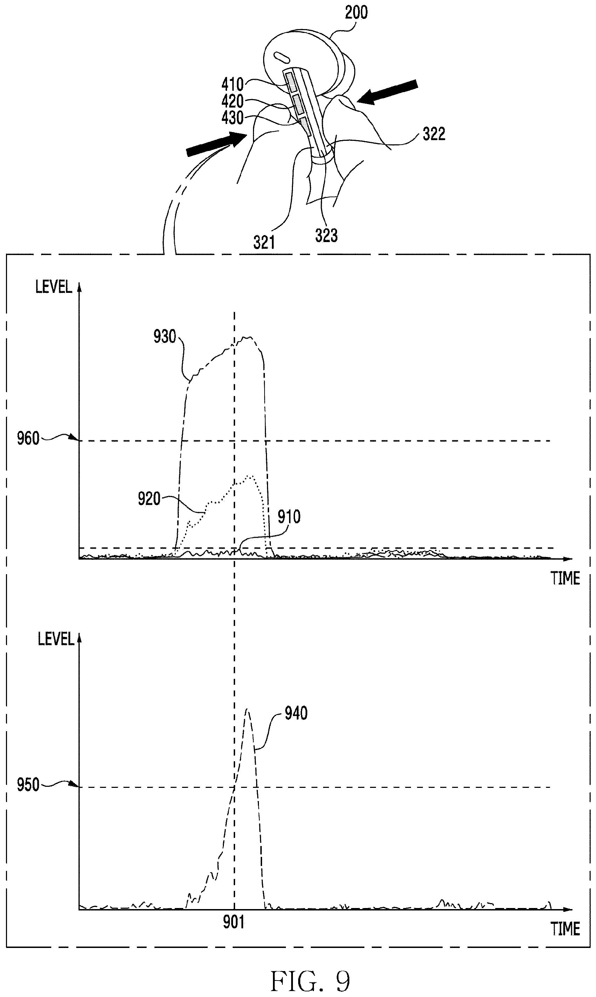

FIG. 9 illustrates an example of an operation of a wearable device for classifying distinguishing a pressure input and a touch input according to an embodiment.

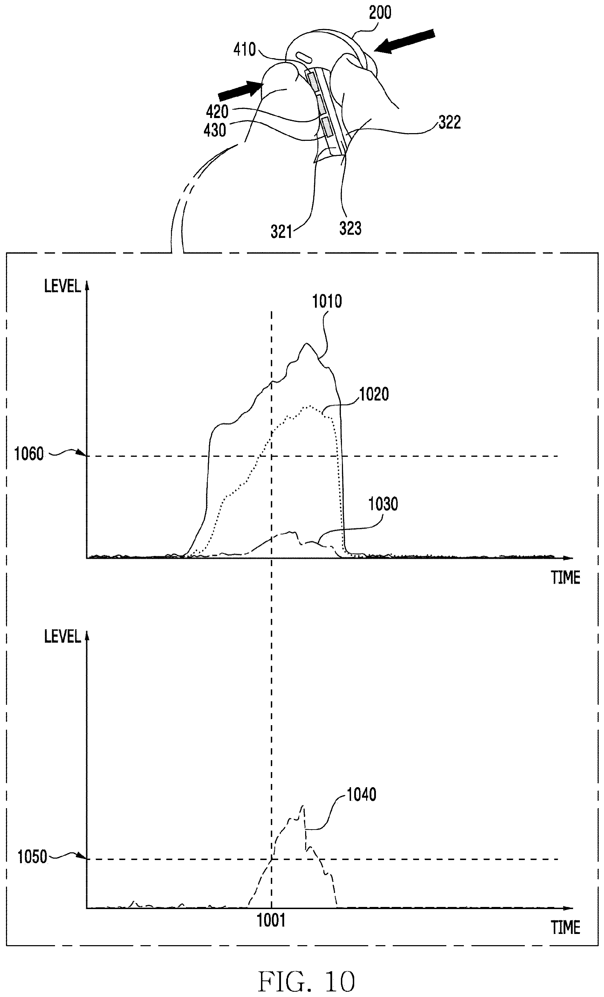

FIG. 10 illustrates an example of an operation of a wearable device for classifying a pressure input and a touch input according to an embodiment.

In the following embodiment, each operation may be performed sequentially, but is not necessarily performed sequentially. For example, the sequence of each operation may be changed, and at least two operations may be performed in parallel.

Referring to FIG. 8, the wearable device 200 may include a main FPCB 333 formed as illustrated in FIG. 5A. For example, in operation 810, the processor 210 may identify (or detect, receive, determine), through a force sensor 232, an input of depressing the second exterior surface 322 with respect to (e.g. towards) the first exterior surface 321 of the wearable device 200. For example, as illustrated in FIG. 6, the user may perform an operation to squeeze (or push, or press) the first exterior surface 321 and the second exterior surface 322 using digits. The processor 210 may identify, through the force sensor 232, an input of depressing the second exterior surface 322 with respect to the first exterior surface 321, based on the user's squeeze operation.

For example, the processor 210 may identify an input of depressing the second exterior surface 322 with respect to the first exterior surface 321, based on a value according to (e.g. derived from, obtained from, calculated from) pressure data identified through the force sensor 232 being greater than a first threshold value. For example, if the pressure data does not indicate a value greater than the first threshold value, the input is not identified.

In operation 820, the processor 210 may identify (or detect, receive, determine) third sensing data obtained through the third touch sensor 231-3. For example, the first touch sensor 231-1 may be configured to identify first sensing data. The second touch sensor 231-2 may be configured to identify second sensing data. The third touch sensor 231-3 may be configured to identify third sensing data.

For example, based on a value according to the first sensing data greater than a second threshold value, the processor 210 may identify a touch input in a first area 410. Based on a value according to the second sensing data being greater than the second threshold value, the processor 210 may identify a touch input in a second area 420. Based on a value according to the third sensing data being greater than the second threshold value, the processor 210 may identify a touch input in a third area 430. In various examples, different threshold values may be provided for each touch sensor.

According to an embodiment, the processor 210 may identify third sensing data obtained through the third touch sensor 231-3 based on identifying an input of depressing the second exterior surface 322 with respect to the first exterior surface 321.

For example, the processor 210 may identify a timing at which an input of depressing the second exterior surface 322 with respect to the first exterior surface 321 is identified. The processor 210 may identify third sensing data obtained through the third touch sensor 231-3 at the timing. The timing may be a length of time, or duration, of the input, or of the depression associated with sensing data providing a value which is greater than the second threshold value; and/or may be a start time and a stop time of the input or depression.

In operation 830, the processor 210 may identify whether the third sensing data is within a reference range. For example, the processor 210 may identify whether the third sensing data is within a reference range, in order to determine whether to perform a function related to the input based on the third sensing data. For example, the processor 210 may identify whether a value related to the third sensing data is greater than the second threshold value. The processor 210 may identify that the third sensing data is within the reference range, based on the value related to the third sensing data being greater than the second threshold value. The processor 210 may identify that the third sensing data is out of the reference range based on the value related to the third sensing data being less than or equal to the second threshold value. It will be appreciated that, in various examples, operations 820 and 830 may be combined.

In operation 840, when the third sensing data is within the reference range, the processor 210 may perform a function related to an input of depressing the second exterior surface 322 with respect to the first exterior surface 321. For example, the processor 210 may perform a function related to an input of depressing the second exterior surface 322 with respect to the first exterior surface 321, based on identifying that the third sensing data is within the reference range. For example, the input may be based on being sensed by or through the third touch sensor 231-3.

For example, the processor 210 may identify that a value related to the third sensing data is greater than the second threshold value at a timing when the input is identified (e.g. when the input is identified, or responsive to identifying the input). The processor 210 may perform a function related to (e.g. linked to, or corresponding to) an input of depressing the second exterior surface 322 with respect to the first exterior surface 321, based on identifying that a value related to the third sensing data is greater than the second threshold value.

For example, after an input of depressing the second exterior surface 322 with respect to the first exterior surface 321 is identified (e.g. following detection of the input), the processor 210 may identify that the input is released. The processor 210 may recognize a pressure input, based on identifying that the input is identified and then the input is released. Based on the pressure input, the processor 210 may provide, through the speaker 220, a notification indicating that the pressure input is identified or may perform a function corresponding to the release of the input or the pressure input. For example, a pressure input, as termed herein (but which may otherwise be referred to as an input, a touch input, a squeeze input etc.), is identified based on identifying an input followed by release of the input, such as a squeeze input which provides a value according to the pressure data which is greater than the first threshold value and is then release (e.g. the value drops to below the first threshold value or the squeeze is released altogether). To correspond to a pressure input, the input may not need to be released in the sense of removing the user's digits from the wearable device entirely (e.g. releasing contact with the wearable device), but instead the input may simply be applied with less pressure (which may result in a value, from corresponding pressure data being less than a corresponding threshold (e.g. the first threshold value).

As an example, the processor 210 may perform a function corresponding to or associated with a pressure input. For example, the function corresponding to a pressure input may be set based on at least one of the number of times the pressure input occurs and a time interval between a timing when an input of depressing the second exterior surface 322 with respect to the first exterior surface 321 is identified, and a timing when the input is released.

According to an embodiment, the processor 210 may support (or identify) various input methods for the wearable device 200. Each of the various input methods may correspond to one function, respectively. For example, each of the various input methods may be mapped to one function. For example, the processor 210 may identify one of first to fourth inputs as an input to the wearable device 200. The first to fourth inputs described below are exemplary, and various input methods may be further set (or defined).

As an example, the processor 210 may identify a first input based on a pressure input being identified once. The processor 210 may perform a function corresponding to the first input. As an example, the processor 210 may identify a second input based on a pressure input being identified twice consecutively. The processor 210 may perform a function corresponding to the second input. As an example, the processor 210 may identify a third input based on the pressure input being identified three times consecutively. The processor 210 may perform a function corresponding to the third input. For example, the processor 210 may identify a fourth input, based on identifying that a time interval in which the pressure input is maintained (or a time interval between a timing when an input depressing the second exterior surface 322 with respect to the first exterior surface 321 is identified and a timing when the input is released) is out of a reference time interval. The processor 210 may perform a function corresponding to the fourth input.

According to an embodiment, the processor 210 may identify a touch input in a third area 430 based on identifying that a value according to the third sensing data is greater than a second threshold value. However, the processor 210 may identify that the value according to the third sensing data is greater than the second threshold value, and a value according to the pressure data is greater than the first threshold value. The processor 210 may ignore a touch input in the third area 430, based on identifying that the value according to the third sensing data is greater than the second threshold value and the value according to the pressure data is greater than the first threshold value. The processor 210 may ignore a touch input in the third area 430, and perform a function related to an input of depressing the second exterior surface 322 with respect to the first exterior surface 321. For example, a pressure input may take priority over a touch input, in the sense that if a pressure input is identified and a touch input is also identified (e.g. based on the same user interaction, such as a squeeze), the function related to the pressure input is performed and the function related to the touch input is not performed. In some examples, the pressure input is not identified or is ignored, or a function corresponding to the pressure input is not performed, unless the touch input is also identified (i.e. a value according to the third sensing data is above the second threshold value).

Referring to FIG. 9, the first exterior surface 321 of the wearable device 200 may include a first area 410, a second area 420, and a third area 430.

For example, the first touch sensor 231-1 may be used to identify a touch input for the first area 410. The first touch sensor 231-1 may be configured to obtain first sensing data regarding a touch input on the first area 410. A graph 910 indicates the first sensing data. For example, the first sensing data may be related to a change amount of capacitance identified by the first touch sensor 231-1.

For example, the second touch sensor 231-2 may be used to identify a touch input for the second area 420. The second touch sensor 231-2 may be configured to obtain second sensing data regarding a touch input on the second area 420. A graph 920 indicates the second sensing data. For example, the second sensing data may be related to a change amount of capacitance identified by the second touch sensor 231-2.

For example, the third touch sensor 231-3 may be used to identify a touch input for the third area 430. The third touch sensor 231-3 may be configured to obtain third sensing data regarding a touch input on the third area 430. A graph 930 indicates the third sensing data. For example, the third sensing data may be related to a change amount of capacitance identified by the third touch sensor 231-3.

For example, the force sensor 232 may be used to identify a pressure input with respect to the third area 430. The force sensor 232 may be configured to obtain pressure data regarding a pressure input on the third area 430. A graph 940 indicates pressure data. For example, the pressure data may be related to a change amount of capacitance identified by the force sensor 232.

According to an embodiment, at a timing 901, the wearable device 200 may identify that a value according to the pressure data is greater than a first threshold value 950. At the timing 901, the wearable device 200 may identify that a value according to the third sensing data is greater than a second threshold value 960. At the timing 901, the wearable device 200 may perform a function related to an input of depressing the second exterior surface 322 with respect to the first exterior surface 321, based on identifying that a value according to the pressure data is greater than the first threshold value 950 and a value according to the third sensing data is greater than the second threshold value 960.

According to an embodiment, at the timing 901, the wearable device 200 may perform a function related to an input of depressing the second exterior surface 322 with respect to the first exterior surface 321, based on identifying that a value according to the pressure data is greater than the first threshold value 950, a value according to the first sensing data is less than or equal to the second threshold value 960, a value according to the second sensing data is less than or equal to the second threshold value 960, and a value according to the third sensing data is greater than the second threshold value 960. For example, different functions may be performed based on different combinations of values identified by each of the sensors (e.g. a value of one sensor being above a corresponding threshold, a value of another sensor being below a corresponding threshold etc.)

Referring back to FIG. 8, in operation 850, when the third sensing data is out of a reference range, the processor 210 may ignore an input of depressing the second exterior surface 322 with respect to the first exterior surface 321. For example, the processor 210 may ignore an input of depressing the second exterior surface 322 with respect to the first exterior surface 321 based on identifying that the third sensing data is out of the reference range.

For example, the processor 210 may identify that a value related to the third sensing data is less than or equal to the second threshold value at a timing when the input is identified. The processor 210 may ignore the input of depressing the second exterior surface 322 with respect to the first exterior surface 321, based on identifying that the value related to the third sensing data is less than or equal to the second threshold value. For example, the reference range relates to the relevant threshold, e.g. in this case, the third sensing data being out of the reference range refers to the value related to the third sensing data being below the second threshold value.

For example, the processor 210 may refrain from identifying the pressure input by ignoring the input of depressing the second exterior surface 322 with respect to the first exterior surface 321. For example, the processor 210 may ignore the input of depressing the second exterior surface 322 with respect to the first exterior surface 321, and may not perform an additional operation to identify the pressure input. For example, the processor 210 may refrain from identifying whether the input of depressing the second exterior surface 322 with respect to the first exterior surface 321 is released. The processor 210 may refrain from identifying whether the input of depressing the second exterior surface 322 with respect to the first exterior surface 321 is released, based on ignoring the input of depressing the second exterior surface 322 with respect to the first exterior surface 321.

Referring to FIG. 10, the first exterior surface 321 of the wearable device 200 may include a first area 410, a second area 420, and a third area 430.

For example, a first touch sensor 231-1 may be used to identify a touch input for the first area 410. The first touch sensor 231-1 may be configured to obtain first sensing data regarding a touch input on the first area 410. A graph 1010 indicates the first sensing data. For example, the first sensing data may be related to a change amount of capacitance identified by the first touch sensor 231-1.

For example, a second touch sensor 231-2 may be used to identify a touch input for the second area 420. The second touch sensor 231-2 may be configured to obtain second sensing data regarding a touch input on the second area 420. A graph 1020 indicates the second sensing data. For example, the second sensing data may be related to a change amount of capacitance identified by the second touch sensor 231-2.

For example, a third touch sensor 231-3 may be used to identify a touch input for the third area 430. The third touch sensor 231-3 may be configured to obtain third sensing data regarding a touch input on the third area 430. A graph 1030 indicates third sensing data. For example, the third sensing data may be related to a change amount of capacitance identified by the third touch sensor 231-3.

For example, a force sensor 232 may be used to identify a pressure input for the third area 430. The force sensor 232 may be configured to obtain pressure data regarding the pressure input on the third area 430. A graph 1040 indicates the pressure data. For example, the pressure data may be related to a change amount of capacitance identified by the force sensor 232.

At the timing 1001, the processor 210 may identify that a value according to the pressure data is greater than a first threshold value 1050. At the timing 1001, the wearable device 200 may identify that a value according to the third sensing data is less than or equal to a second threshold value 1060. At the timing 1001, the wearable device 200 may ignore an input of depressing the second exterior surface 322 with respect to the first exterior surface 321, based on identifying that a value according to the pressure data is greater than the first threshold value 1050 and a value according to the third sensing data is less than or equal to the second threshold value 1060.

According to an embodiment, at the timing 1001, the wearable device 200 may identify a touch input of at least a portion of the first area 410 and the second area 420, based on identifying that a value according to the second sensing data is greater than the second threshold value 1060, or a value according to the third sensing data is greater than the third threshold value 1060.

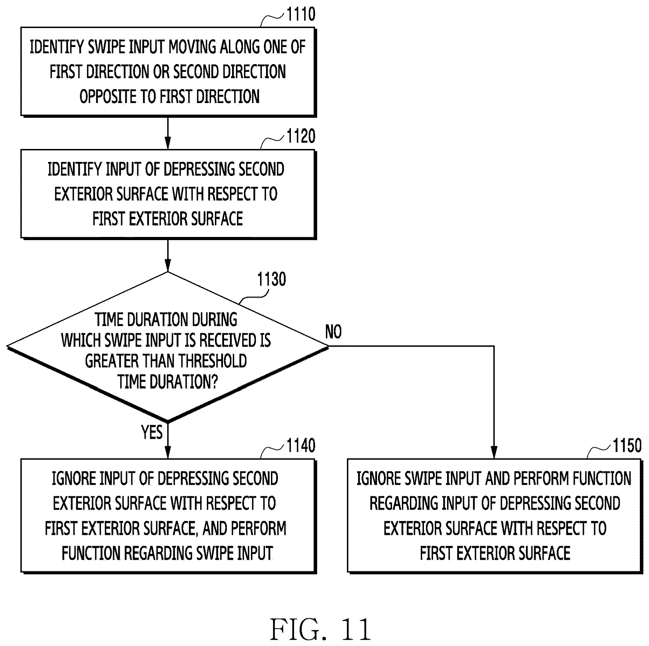

FIG. 11 is a flowchart illustrating an operation of a wearable device according to an embodiment.

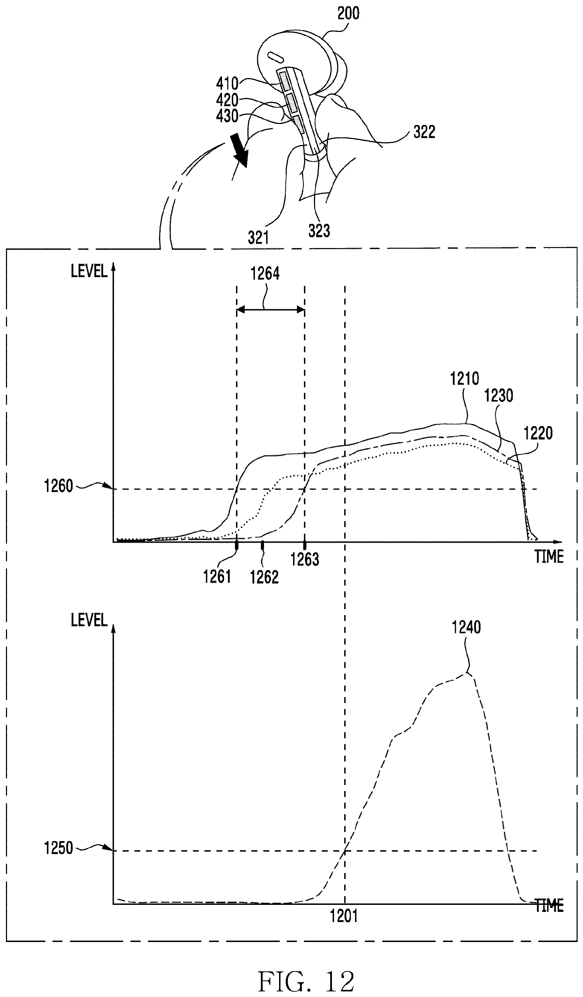

FIG. 12 illustrates an example of an operation of a wearable device for classifying a pressure input and a swipe input, according to an embodiment.

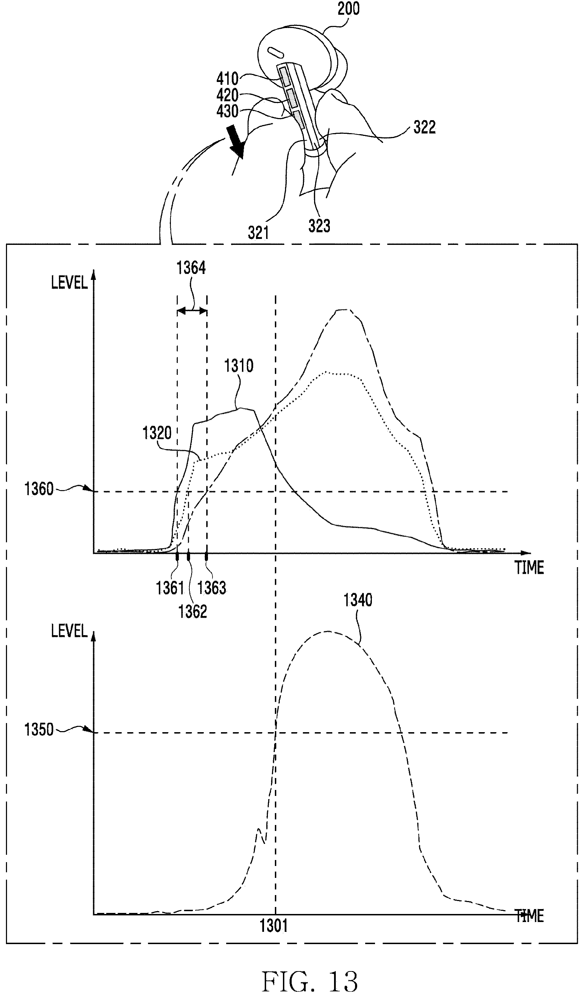

FIG. 13 illustrates an example of an operation of a wearable device for classifying a pressure input and a swipe input, according to an embodiment.

In the following embodiment, each operation may be performed sequentially, but is not necessarily performed sequentially. For example, the sequence of each operation may be changed, and at least two operations may be performed in parallel.

Referring to FIG. 11, in operation 1110, a processor 210 of a wearable device 200 may identify (e.g. detect, determine, receive) a swipe input moving along one of a first direction or a second direction opposite to the first direction.

For example, a first touch sensor 231-1 may be configured to identify first sensing data. A second touch sensor 231-2 may be configured to identify second sensing data. A third touch sensor 231-3 may be configured to identify third sensing data.

For example, based on a value according to the first sensing data being greater than a second threshold value, the processor 210 may identify a touch input in a first area 410. Based on a value according to the second sensing data being greater than the second threshold value, the processor 210 may identify a touch input in a second area 420. Based on a value according to the third sensing data being greater than the second threshold value, the processor 210 may identify a touch input in a third area 430.

According to an embodiment, the processor 210 may identify a swipe input moving along one of a first direction or a second direction opposite to the first direction, based on the first sensing data, the second sensing data, and the third sensing data.

For example, the first direction may mean a direction in which the second housing part 320 extends with respect to the first housing part 310. As an example, the first direction may correspond to the -y direction of FIG. 3A (e.g. a downwards direction, referring to the orientation of the wearable device 200 as shown in FIG. 3A). The second direction may correspond to the +y direction of FIG. 3A. (e.g. an upwards direction, referring to the orientation of the wearable device as shown in FIG. 3A)

According to an embodiment, the processor 210 may identify a first timing at which a value according to the first sensing data is greater than the second threshold value. The processor 210 may identify a second timing at which a value according to the second sensing data is greater than the second threshold value. The processor 210 may identify a third timing at which a value according to the third sensing data is greater than the second threshold value.

For example, a swipe input moving along the first direction may be an input in which a touch input for the first area 410, a touch input for the second area 420, and a touch input for the third area 430 are sequentially identified. The processor 210 may identify a swipe input moving along the first direction, based on identifying that the first timing, the second timing, and the third timing are sequential. It will be appreciated that a swipe input may also be identified based on sequentially identifying a touch input for each of at least two of the first area 410, second area 420 or third area 430 (e.g. for first and second areas(410, 420) or for second and third areas(420, 430)).

A swipe input moving along the second direction may be an input in which a touch input for the third area 430, a touch input for the second area 420, and a touch input for the first area 410 are sequentially identified. The processor 210 may identify a swipe input moving along the second direction, based on identifying that the third timing, the second timing, and the first timing are sequential.

In operation 1120, the processor 210 may identify an input of depressing the second exterior surface 322 with respect to the first exterior surface 321. After the swipe input is identified, the processor 210 may identify an input of depressing the second exterior surface 322 with respect to the first exterior surface 321.

For example, as illustrated in FIG. 6, the user may perform an operation of squeezing the first exterior surface 321 and the second exterior surface 322 using fingers. Based on the user's squeeze operation, the processor 210 may identify, through the force sensor 232, an input of depressing the second exterior surface 322 with respect to the first exterior surface 321.

For example, the processor 210 may identify an input of depressing the second exterior surface 322 with respect to the first exterior surface 321, based on a value according to the pressure data identified through the force sensor 232 being greater than the first threshold value.

In operation 1130, the processor 210 may identify whether time duration during which the swipe input is received is greater than threshold time duration. For example, the processor 210 may identify a first timing at which a touch input to the first area 410 is identified, and may identify a third timing at which a touch input to the third area 430 is identified. The processor 210 may identify time duration between the first timing and the third timing as time duration during which a swipe input is received. According to an embodiment, the processor 210 may identify a second timing at which a touch input to the second area 420 is identified, and identify a third timing at which a touch input to the third area 430 is identified. The processor 210 may identify time duration between the second timing and the third timing as time duration during which a swipe input is received.

In operation 1140, when the time duration during which the swipe input is received is greater than the threshold time duration, the processor 210 may ignore an input of depressing the second exterior surface 322 with respect to the first exterior surface 321, and perform a function related to the swipe input (e.g. a pressure input is ignored or is not identified). For example, based on the time duration during which the swipe input is received being greater than threshold time duration, the processor 210 may ignore an input of depressing the second exterior surface 322 with respect to the first exterior surface 321, and perform a function related to the swipe input. For example, the processor 210 may provide, through the speaker 220, a notification indicating that the swipe input is identified, based on the swipe input.

According to an embodiment, when the time duration during which the swipe input is received is greater than the threshold time duration, even if an input of depressing the second exterior surface 322 with respect to the first exterior surface 321 is identified within a defined time after the swipe input is received, the processor 210 may ignore the input and perform a function related to the swipe input. When the time duration during which the swipe input is received is greater than the threshold time duration, the processor 210 may identify that the user has performed the swipe input.

Referring to FIG. 12, a first exterior surface 321 of a wearable device 200 may include a first area 410, a second area 420, and a third area 430.

For example, a first touch sensor 231-1 may be used to identify a touch input for the first area 410. The first touch sensor 231-1 may be configured to obtain first sensing data regarding a touch input on the first area 410. A graph 1210 indicates the first sensing data. For example, the first sensing data may be related to a change amount of capacitance identified by the first touch sensor 231-1.

For example, a second touch sensor 231-2 may be used to identify a touch input for the second area 420. The second touch sensor 231-2 may be configured to obtain second sensing data regarding a touch input on the second area 420. A graph 1220 indicates the second sensing data. For example, the second sensing data may be related to a change amount of capacitance identified by the second touch sensor 231-2.

For example, a third touch sensor 231-3 may be used to identify a touch input for the third area 430. The third touch sensor 231-3 may be configured to obtain third sensing data regarding a touch input on the third area 430. A graph 1230 indicates the third sensing data. For example, the third sensing data may be related to a change amount of capacitance identified by the third touch sensor 231-3.

For example, a force sensor 232 may be used to identify a pressure input for the third area 430. The force sensor 232 may be configured to obtain pressure data regarding a pressure input on the third area 430. A graph 1240 indicates the pressure data. For example, the pressure data may be related to a change amount of capacitance identified by the force sensor 232.

According to an embodiment, the wearable device 200 may identify a touch input when a value according to sensing data (e.g., the first sensing data, the second sensing data, and the third sensing data) is greater than a second threshold value 1260. The wearable device 200 may identify a pressure input, when a value according to pressure data is greater than a first threshold value 1250.

For example, at a timing 1261, the wearable device 200 may identify that a value according to the first sensing data is greater than a second threshold value 1260. At a timing 1261, the wearable device 200 may identify a touch input on the first area 410. At a timing 1262, the wearable device 200 may identify a touch input on the second area 420. At a timing 1263, the wearable device 200 may identify a touch input on the third area 430. The wearable device 200 may identify a swipe input based on sequentially identifying the touch input on the first area 410, the touch input on the second area 420, and the touch input on the third area 430. For example, time duration during which the swipe input is received may be time duration 1264 from a timing 1261 at which the touch input on the first area 410 is identified to a timing 1263 at which the touch input on the third area 430 is identified.

According to an embodiment, when a touch input on the second area 420 and a touch input on the first area 410 are sequentially identified, time duration during which the swipe input is received may be time period from a timing at which the touch input on the second area 420 is identified to a timing at which the touch input on the first area 410 is identified.

After the swipe input is identified, at the timing 1201, the processor 210 may identify that a value according to the pressure data is greater than the first threshold value 1250. Based on identifying that the value according to the pressure data is greater than the first threshold value 1250, the processor 210 may identify an input of depressing the second exterior surface 322 with respect to the first exterior surface 321.

Based on identifying the input depressing the second exterior surface 322 with respect to the first exterior surface 321, the processor 210 may identify time duration 1264 during which the swipe input is received. The processor 210 may identify whether the time duration 1264 during which the swipe input is received is greater than threshold time duration. The processor 210 may identify that the time duration 1264 during which the swipe input is received is greater than the threshold time duration. Based on identifying that the time duration 1264 during which the swipe input is received is greater than the threshold time duration, the processor 210 may ignore an input of depressing the second exterior surface 322 with respect to the first exterior surface 321, and perform a function related to the swipe input.

Referring back to FIG. 11, in operation 1150, when the time duration during which the swipe input is received is not greater than the threshold time duration, the processor 210 may ignore the swipe input and perform a function related to the input of depressing the second exterior surface 232 with respect to the first exterior surface 231. For example, based on identifying that the time duration during which the swipe input is received is not greater than the threshold time duration, the processor 210 may ignore the swipe input, and perform a function related to the input of depressing the second exterior surface 232 with respect to the first exterior surface 231. For example, when the time duration during which the swipe input is received is less than or equal to the threshold time duration, the processor 210 may ignore the swipe input and perform a function related to the input of depressing the second exterior surface 232 with respect to the first exterior surface 231. For example, based on identifying that the time duration during which the swipe input is received is less than or equal to the threshold time duration, the processor 210 may ignore the swipe input, and perform a function related to the input of depressing the second exterior surface 232 with respect to the first exterior surface 231.

According to an embodiment, when the time duration during which the swipe input is received is less than or equal to the threshold time duration, if the input of depressing the second exterior surface 322 with respect to the first exterior surface 321 is identified within a defined time after the swipe input is received, the processor 210 may ignore the swipe input and perform a function related to the input. When the time duration during which the swipe input is received is less than or equal to the threshold time duration, the processor 210 may identify that the user has performed the input (or pressure input according to the input).

For example, after the input of depressing the second exterior surface 322 with respect to the first exterior surface 321 is identified, the processor 210 may identify that the input is released. The processor 210 may recognize a pressure input based on identifying that the input is identified and that the input is released. Based on the pressure input, the processor 210 may provide, through the speaker 220, a notification indicating that the pressure input is identified. For example, the notification may relate to the performing of a function which corresponds to the pressure input, thereby indicating that the pressure input is identified.

As an example, the processor 210 may perform a function corresponding to the pressure input. For example, the function corresponding to the pressure input may be set based on at least one of the number of times the pressure input occurs and a time interval between a timing at which the input of depressing the second exterior surface 322 with respect to the first exterior surface 321 is identified and a timing at which the input is released.

As an example, the processor 210 may perform a first function, based on the pressure input being identified once. As an example, the processor 210 may perform a second function, based on the pressure input being identified twice consecutively. As an example, the processor 210 may perform a third function, based on the pressure input being identified three times consecutively . The processor 210 may perform a fourth function based on identifying that a time interval in which the pressure input is maintained (or time interval between a timing at which the input of depressing the second exterior surface 322 with respect to the first exterior surface 321 is identified and a timing at which the input is released) is out of a reference time interval.

Referring to FIG. 13, a first exterior surface 321 of a wearable device 200 may include a first area 410, a second area 420, and a third area 430.

For example, a first touch sensor 231-1 may be used to identify a touch input for the first area 410. The first touch sensor 231-1 may be configured to obtain first sensing data regarding a touch input on the first area 410. A graph 1310 indicates the first sensing data. For example, the first sensing data may be related to a change amount of capacitance identified by the first touch sensor 231-1.

For example, a second touch sensor 231-2 may be used to identify a touch input for the second area 420. The second touch sensor 231-2 may be configured to obtain second sensing data regarding a touch input on the second area 420. A graph 1320 indicates the second sensing data. For example, the second sensing data may be related to a change amount of capacitance identified by the second touch sensor 231-2.

For example, a third touch sensor 231-3 may be used to identify a touch input for the third area 430. The third touch sensor 231-3 may be configured to obtain third sensing data regarding a touch input on the third area 430. A graph 1330 indicates the third sensing data. For example, the third sensing data may be related to a change amount of capacitance identified by the third touch sensor 231-3.

For example, a force sensor 232 may be used to identify a pressure input for the third area 430. The force sensor 232 may be configured to obtain pressure data regarding a pressure input on the third area 430. A graph 1340 indicates the pressure data. For example, the pressure data may be related to a change amount of capacitance identified by the force sensor 232.

According to an embodiment, the wearable device 200 may identify a touch input, when a value according to sensing data (e.g., the first sensing data, the second sensing data, and the third sensing data) is greater than a second threshold value 1360. When a value according to pressure data is greater than the first threshold value 1350, the wearable device 200 may identify the pressure input.

For example, at a timing 1361, the wearable device 200 may identify that a value according to the first sensing data is greater than the second threshold value 1360. At the timing 1361, the wearable device 200 may identify a touch input on the first area 410. At a timing 1362, the wearable device 200 may identify a touch input on the second area 420. At a timing 1363, the wearable device 200 may identify a touch input on the third area 430. The wearable device 200 may identify a swipe input based on sequentially identifying the touch input on the first area 410, the touch input on the second area 420, and the touch input on the third area 430. For example, time duration during which the swipe input is received may be time duration 1364 from the timing 1361 at which the touch input on the first area 410 is identified to the timing 1363 at which the touch input on the third area 430 is identified.

After the swipe input is identified, at the timing 1301, the processor 210 may identify that a value according to the pressure data is greater than a first threshold value 1350. Based on identifying that the value according to the pressure data is greater than the first threshold value 1350, the processor 210 may identify an input of depressing the second exterior surface 322 with respect to the first exterior surface 321.

The processor 210 may identify the time duration 1364 during which the swipe input is received, based on identifying the input of depressing the second exterior surface 322 with respect to the first exterior surface 321. The processor 210 may identify whether the time duration 1364 during which the swipe input is received is greater than threshold time duration. The processor 210 may identify that the time duration 1364 during which the swipe input is received is less than or equal to threshold time duration. Based on identifying that the time duration 1364 during which the swipe input is received is less than or equal to the threshold time duration, the processor 210 may ignore the swipe input and perform a function related to the input of depressing the second exterior surface 322 with respect to the first exterior surface 321.

Referring to FIGS. 12 and 13, the processor 210 may identify that a touch input for the first area 410, a touch input for the second area 420, and a touch input for the third area 430 are sequentially received. Based on identifying that a touch input for the first area 410, a touch input for the second area 420, and a touch input for the third area 430 are sequentially received, the processor 210 may identify a swipe input for the first area 410, the second area 420, and the third area 430.

For example, as illustrated in FIG. 13, the processor 210 may identify a pressure input on the third area 430 after the swipe input is identified. The processor 210 may identify that the user has performed the pressure input on the third area 430 based on identifying that a length of a time during which the swipe input is received is less than or equal to a threshold time. Accordingly, the processor 210 may ignore the swipe input and perform a function according to the pressure input on the third area 430. In various examples, the swipe input is identified or not ignored based on determining that the length of time during which the swipe input is received is greater than a threshold time; i.e. the time taken to perform the swipe input must be longer than the threshold time (e.g. the swipe input requires a slow(er) movement by the user's digit(s)). However, it will be appreciated that, in other examples, a swipe input is identified or not ignored based on determining that the length of time during which the swipe input is received is less than or equal to a threshold time; i.e. the time taken to perform the swipe input must be less than the threshold time (e.g. the swipe input requires a fast(er) movement by the user's digit(s)); in which case the swipe input may be ignored if the time taken to perform it is longer than the threshold time. In further examples, a swipe input is identified or not ignored regardless of whether the time taken to perform the swipe input is greater than a threshold time, but a function corresponding to the swipe input is different depending on whether the time taken to perform the swipe input is greater than a threshold time ,or less than or equal to the threshold time. For example, a faster swipe input results in one function being performed, while a slower swipe input results in another function being performed.

For example, as illustrated in FIG. 12, the processor 210 may identify a pressure input on the third area 430 after the swipe input is identified. The processor 210 may identify that the user has performed the swipe input based on identifying that a length of a time during which the swipe input is received is greater than a threshold time. Accordingly, the processor 210 may ignore the pressure input on the third area 430 and perform a function according to the swipe input.

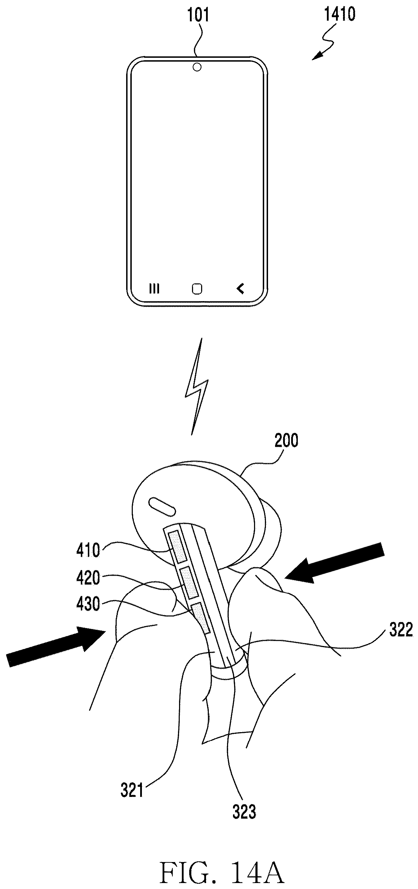

FIG. 14A illustrates an example of an operation of a wearable device according to a pressure input according to an embodiment.

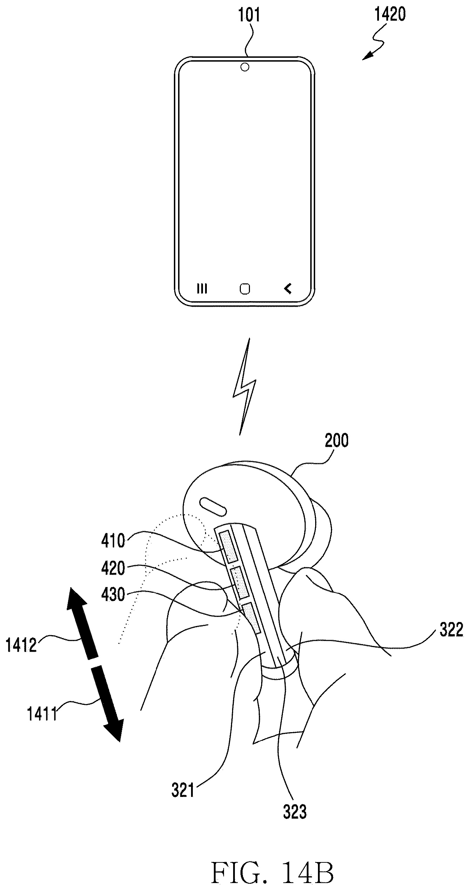

FIG. 14B illustrates an example of an operation of a wearable device according to a swipe input according to an embodiment.

Referring to FIGS. 14A and 14B, a first touch sensor 231-1 may be used to identify a touch input for a first area 410. The first touch sensor 231-1 may be configured to obtain first sensing data regarding a touch input on the first area 410. A second touch sensor 231-2 may be used to identify a touch input for a second area 420. The second touch sensor 231-2 may be configured to obtain second sensing data regarding a touch input on the second area 420. A third touch sensor 231-3 may be used to identify a touch input for a third area 430. The third touch sensor 231-3 may be configured to obtain third sensing data regarding a touch input on the third area 430. A force sensor 232 may be used to identify a pressure input for the third area 430. The force sensor 232 may be configured to obtain pressure data regarding a pressure input on the third area 430.

According to an embodiment, as described in FIGS. 9 to 11, the processor 210 may identify an input received from the user as one of a pressure input and a touch input.

According to a state 1410, the processor 210 may identify an input of depressing a second exterior surface 322 with respect to a first exterior surface 321, based on identifying that, in the third area 430, a value according to the pressure data is greater than a first threshold value. The processor 210 may identify a pressure input based on identifying that the input is released.

According to a state 1420, the processor 210 may identify a touch input for the first area 410, based on identifying that, in the first area 410, a value according to the first sensing data is greater than a second threshold value. For example, the processor 210 may identify a touch input for the second area 420, based on identifying that, in the second area 420, a value according to the second sensing data is greater than the second threshold value. For example, the processor 210 may identify a touch input for the third area 430, based on identifying that, in the third area 430, a value according to the third sensing data is greater than the second threshold value.

According to an embodiment, the processor 210 may identify a swipe input moving along one of a first direction 1411 and a second direction 1412.

For example, a swipe input moving along the first direction 1411 may be an input in which a touch input for the first area 410, a touch input for the second area 420, and a touch input for the third area 430 are sequentially identified. For example, a swipe input moving along the second direction 1412 may be an input in which a touch input for the third area 430, a touch input to the second area 420, and a touch input to the first area 410 are sequentially identified.

Referring to FIGS. 14A and 14B, when three touch sensors 231 are included, the processor 210 (or sensor processor) may identify an area in which a swipe input is started. The processor 210 may perform different functions according to an area in which the swipe input is started and an area in which the swipe input is terminated.

For example, when a swipe input from the third area 430 to the second area 420 is identified, the processor 210 may transmit, to the electronic device 101, a signal for executing a first function related to the electronic device 101. The processor 210 may control an operation of the electronic device 101 based on the signal for executing the first function. As an example, the processor 210 may cause the electronic device 101 to increase the volume of a media application executed in the electronic device 101, e.g. by 1 step, based on a swipe input from the third area 430 to the second area 420. As an example, the processor 210 may cause the electronic device 101 to perform a skip song function, e.g. skip one song function, of a media application executed in the electronic device 101 based on the swipe input from the third area 430 to the second area 420.

For example, when a swipe input from the third area 430 to the first area 410 is identified, the processor 210 may transmit, to the electronic device 101, a signal for executing a second function related to the electronic device 101. The processor 210 may control an operation of the electronic device 101 based on the signal for executing the second function. As an example, the processor 210 may cause the electronic device 101 to increase the volume of a media application executed in the electronic device 101, e.g. by 2 steps, based on a swipe input from the third area 430 to the first area 410. As an example, the processor 210 may cause the electronic device 101 to perform another skip function, e.g. skip two-songs function, of a media application executed in the electronic device 101 based on the swipe input from the third area 430 to the first area 410. Accordingly, in various examples, the function of the swipe input is performed based on the number of touch inputs (e.g. sequential touch inputs on individual areas associated with different touch sensors) identified for the swipe input.

For example, when a swipe input from the first area 410 to the second area 420 is identified, the processor 210 may transmit, to the electronic device 101, a signal for executing a third function related to the electronic device 101. The processor 210 may control an operation of the electronic device 101 based on the signal for executing the third function. As an example,, the processor 210 may cause the electronic device 101 to reduce the volume of a media application executed in the electronic device 101, e.g. by 1 step, based on the swipe input from the first area 410 to the second area 420.

For example, when a swipe input from the first area 410 to the third area 430 is identified, the processor 210 may transmit, to the electronic device 101, a signal for executing a fourth function related to the electronic device 101. The processor 210 may control an operation of the electronic device 101 based on the signal for executing the fourth function. As an example, the processor 210 may cause the electronic device 101 to reduce the volume of a media application executed in the electronic device 101, e.g. by 2 steps, based on the swipe input from the first area 410 to the third area 430.

According to an embodiment, the processor 210 may set a function corresponding to a pressure input, based on at least one of the number of times the pressure input occurs and/or a time interval during which the pressure input is maintained.

For example, when a pressure input is identified once in the wearable device 200, a function of playing (or pausing) a media application being executed in the electronic device 101 may be performed. For example, when a pressure input is identified once in the wearable device 200, a function for stopping the output of a voice signal for a notification of the electronic device 101 may be performed. For example, when a pressure input is identified once in the wearable device 200, a function for call connection (or call termination) may be performed in the electronic device 101.

For example, when a pressure input is identified twice consecutively in the wearable device 200, a next media playing function of a media application being executed in the electronic device 101 may be performed.

For example, when a pressure input is identified three times consecutively in the wearable device 200, a previous media playing function of a media application being executed in the electronic device 101 may be performed. As an example, when a pressure input is identified three times in a state in which a media is played beyond a specified time interval in the wearable device 200, the media may be returned to the beginning of the media being played. As an example, when a pressure input is identified three times consecutively in the wearable device 200 in a state in which a media is played for less than or equal to a specified time interval, a previous media (or music) of the media (or music) being played may be played.

For example, when a time during which the pressure input is maintained in the wearable device 200 is longer than a reference time, a noise control mode (e.g., operating the ANC function or the Ambient function) of the wearable device 200 may be activated (or deactivated).

According to an embodiment, when a time during which a second pressure input is maintained is maintained longer than a reference time after the first pressure input is identified in the wearable device 200, a function of translating a voice conversation in real time may be executed.

For example, the processor 210 (or the communication circuitry 240) of the wearable device 200 may identify a type of a master device (e.g., the electronic device 101). For example, the processor 210 of the wearable device 200 may identify whether the electronic device 101 is a device supporting an AI function. Based on identifying that the electronic device 101 provides the AI function, the processor 210 may identify a user input in which a time during which the second pressure input is maintained is maintained longer than a reference time after the first pressure input is identified. The processor 210 may activate the AI function of the electronic device 101 based on the user input. For example, after activating the AI function of the electronic device 101, the processor 210 may activate a microphone of the wearable device 200 based on the pressure input. The processor 210 may obtain first voice data of a first language type using the microphone. The processor 210 may transmit the first voice data of the first language type to the electronic device 101. The electronic device 101 may obtain at least one of text data of a second language type and/or second voice data of the second language type through the first voice data of the first language type. For example, the text data of the second language type may be displayed through a display of the electronic device 101. For example, the second voice data of the second language type may be transmitted to the wearable device 200. The wearable device 200 may output the second voice data of the second language type through a speaker. The wearable device 200 may provide a real-time translation function using the above-described function.

According to an embodiment, the electronic device 101 connected to the wearable device 200 may include a television (TV) or a sound bar.

For example, in a state that a touch for the third area 430 is maintained after a pressure input is identified in the third area 430, a swipe input from the third area 430 to the first area 410 may be identified. The processor 210 may identify a user input, in response to identifying a swipe input from the third area 430 to the first area 410 after a pressure input is identified in the third area 430. The processor 210 may increase the volume of a woofer speaker based on the user input. For example, when the pressure input is not identified and only the swipe input is identified, the processor 210 may change the volume of a tweeter speaker.

For example, the wearable device 200 may include a first device worn on a left ear and a second device worn on a right ear. In the first device, the processor 210 may tune the electronic device 101 (e.g., TV) channel down, based on identifying a pressure input after a swipe input from the first area 410 to the third area 430 is identified. In the second device, the processor 210 may tune the electronic device 101 (e.g., TV) channel up, based on identifying a pressure input after a swipe input from the first area 410 to the third area 430 is identified.

According to the above-described embodiment, the force sensor 232 may face at least a portion of a plurality of touch sensors. For example, the force sensor 232 may be disposed to face at least a portion of the second touch sensor 231-2 and/or the third touch sensor 231-3. As the force sensor 232 faces at least a portion of the second touch sensor 231-2 and/or the third touch sensor 231-3, a position at which a pressure is identified among the first area to the third area may be identified, and when the force sensor 232 faces all of the first touch sensor 231-1 to the third touch sensor 231-3, a malfunction may occur in which the force sensor 232 operates even with a force causing a slight twisting of a housing. Therefore, since the wearable device 200 may identify a pressure input in an area (e.g., the third area) in which the force sensor is located, a probability of malfunction may be reduced. In addition, as a touch area is composed of a flat surface, a sufficient space for a swipe input is secured, and accordingly, the probability of malfunction may be reduced.

The effects that can be obtained from the present disclosure are not limited to those described above, and any other effects not mentioned herein will be clearly understood by those having ordinary knowledge in the art to which the present disclosure belongs, from the following description.

According to an embodiment, a wearable device (e.g., the wearable device 200) may comprise a speaker (e.g., the speaker 220) and a housing. The housing may comprise a first housing part (e.g., the first housing part 310) comprising the speaker, and at least partially received within an ear of a user of the wearable device, and a second housing part (e.g., the second housing part 320) extending from the first housing part. The second housing part may comprise a first exterior surface (e.g., the first exterior surface 321) including one or more protrusions (e.g., the protrusion 351), a second exterior surface (e.g., a second exterior surface 322) including one or more protrusions (e.g., the protrusion 352) and inclined relative to the first exterior surface of the second housing part, and a force sensor (e.g., the force sensor 232) disposed in an interior space of the second housing part for identifying the second exterior surface that is depressed relative to the first exterior surface.

According to an embodiment, the second housing part may comprise a third exterior surface connecting the first exterior surface and the second exterior surface and inclined with respect to the first outer surface and the second outer surface.

According to an embodiment, the second housing part may comprise one or more touch sensors. The one or more touch sensors may be disposed along a first direction in which the second housing part extends, toward an inner surface of the second housing part opposite to the first exterior surface. At least one of the one or more touch sensors may be disposed between the force sensor and the inner surface of the second housing part.

According to an embodiment, the one or more touch sensors may comprise a first touch sensor (e.g., the first touch sensor 231-1), a second touch sensor (e.g., the second touch sensor 231-2), and a third touch sensor (e.g., the third touch sensor 231-3) which are disposed along the first direction, toward the inner surface of the second housing part opposite to the first exterior surface. The first touch sensor, the second touch sensor, and the third touch sensor may be disposed substantially on the same plane. The third touch sensor may be disposed between the force sensor and the inner surface of the second housing.

According to an embodiment, the second housing part may comprise electronic component. A first part of the electronic component may be spaced a first distance from the plane in a second direction toward the inside of the second housing part, distinct from the first direction. A second part of the electronic component may be spaced a second distance, greater than the first distance, in the second direction from the plane. The force sensor may be disposed between the second part of the electronic component and the plane.

According to an embodiment, the first touch sensor may be configured to obtain first sensing data related to a first area on the first external surface. The second touch sensor may be configured to obtain second sensing data related to a second area on the first external surface. The third touch sensor may be configured to obtain third sensing data related to a third area on the first external surface.

According to an embodiment, the wearable device may comprise memory (e.g., the memory 250) storing instructions, comprising one or more storage media, and at least one processor (e.g., the processor 210) comprising processing circuitry. The instructions, when executed by the at least one processor individually or collectively, may cause the wearable device to identify, via the force sensor, an input depressing the second exterior surface with respect to the first exterior surface. The instructions, when executed by the at least one processor individually or collectively, may cause the wearable device to identify, based on the input depressing the second exterior surface with respect to the first exterior surface, the third sensing data obtained via the third touch sensor. The instructions, when executed by the at least one processor individually or collectively, may cause the wearable device to, based on the third sensing data within a reference range, perform a function related to the input. The instructions, when executed by the at least one processor individually or collectively, may cause the wearable device to, based on the third sensing data out of the reference range, ignore the input.

According to an embodiment, the instructions, when executed by the at least one processor individually or collectively, may cause the wearable device to recognize, based on the third sensing data within the reference range, a pressure input according to the input. The instructions, when executed by the at least one processor individually or collectively, may cause the wearable device to perform the function corresponding to the pressure input.

According to an embodiment, the instructions, when executed by the at least one processor individually or collectively, may cause the wearable device to identify, based on the first sensing data, the second sensing data, and the third sensing data, a swipe input moving along one of the first direction and a third direction opposite to the first direction. The instructions, when executed by the at least one processor individually or collectively, may cause the wearable device to, based on the swipe input, determine whether to perform the function related to the input depressing the second exterior surface with respect to the first exterior surface identified after the swipe input.

According to an embodiment, the instructions, when executed by the at least one processor individually or collectively, may cause the wearable device to, based on the swipe input received during time duration less than or equal to threshold time duration, ignore the swipe input, and perform the function related to the input.

According to an embodiment, the instructions, when executed by the at least one processor individually or collectively, may cause the wearable device to, based on the swipe input received during time duration longer than the threshold time duration, ignore the input, and perform a function related to the swipe input.

According to an embodiment, the instructions, when executed by the at least one processor individually or collectively, may cause the wearable device to recognize the pressure input based on identifying that the input depressing the second exterior surface with respect to the first exterior surface is released.

According to an embodiment, the function corresponding to the pressure input may be set based on at least one of the number of times the pressure input occurs or a time interval between a timing when the input is identified and a timing when the input is released.

According to an embodiment, the instructions, when executed by the at least one processor individually or collectively, may cause the wearable device to, transmit, based on recognizing the pressure input and another pressure input distinct from the pressure input, a signal for causing an electronic device connected with the wearable device to execute a function for changing a first language type to a second language type.

According to an embodiment, the wearable device may comprise a microphone. The instructions, when executed by the at least one processor individually or collectively, may cause the wearable device to, while the function is executed in the electronic device, obtain first voice data of the first language type using the microphone. The instructions, when executed by the at least one processor individually or collectively, may cause the wearable device to, based on transmitting, to the electronic device, the first voice data of the first language type, receive second voice data of the second language type, obtained from the first voice data of the first language type. The instructions, when executed by the at least one processor individually or collectively, may cause the wearable device to output, via the speaker, the second voice data.

According to an embodiment, a method performed by a wearable device may comprise identifying, via a force sensor of the wearable device, an input depressing a second exterior surface of the wearable device with respect to a first exterior surface of the wearable device, the second exterior inclined relative to the first exterior surface. The method may comprise identifying, based on the input depressing the second exterior surface with respect to the first exterior surface, sensing data obtained via one of a plurality of touch sensors. The method may comprise, based on the sensing data within a reference range, performing a function related to the input. The method may comprise, based on the third sensing data out of the reference range, ignoring the input.

According to an embodiment, the method may comprise recognizing, based on the sensing data within the reference range, a pressure input according to the input. The method may comprise performing the function corresponding to the pressure input.

According to an embodiment, the method may comprise identifying a swipe input moving along a reference direction with respect to the first exterior surface. The method may comprise, based on the swipe input, determining whether to perform the function related to the input depressing the second exterior surface with respect to the first exterior surface identified after the swipe input.

According to an embodiment, the method may comprise, based on the swipe input received during time duration less than or equal to threshold time duration, ignoring the swipe input, and performing the function related to the input.

According to an embodiment, the method may comprise, based on the swipe input received during time duration longer than the threshold time duration, ignoring the input, and performing a function related to the swipe input.

According to an embodiment, a non-transitory computer readable storage medium may store one or more programs. The one or more programs may include instructions which, when executed by at least one processor of a wearable device with a force sensor and a plurality of touch sensors, cause the wearable device to identify, via the force sensor, an input depressing a second exterior surface of the wearable device with respect to a first exterior surface of the wearable device, the second exterior inclined relative to the first exterior surface. The one or more programs may include instructions which, when executed by the at least one processor, cause the wearable device to identify, based on the input depressing the second exterior surface with respect to the first exterior surface, sensing data obtained via one of a plurality of touch sensors. The one or more programs may include instructions which, when executed by the at least one processor, cause the wearable device to, based on the sensing data within a reference range, perform a function related to the input. The one or more programs may include instructions which, when executed by the at least one processor, cause the wearable device to, based on the third sensing data out of the reference range, ignore the input.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will also be appreciated that certain aspects and embodiments of the disclosure provide subject matter in accordance with the following numbered paragraphs.
Paragraph 1. A wearable device comprising: a speaker; and a housing, wherein the housing comprises: a first housing part comprising the speaker and configured to be at least partially receivable within an ear of a user of the wearable device, and a second housing part extending from the first housing part in a first direction, wherein the second housing part comprises: a first exterior surface including one or more protrusions extending along the first direction; a second exterior surface including one or more protrusions extending along the first direction, the second exterior surface inclined relative to the first exterior surface, and a force sensor disposed in an interior space of the second housing part and configured to identify application of a force on one of the first exterior surface and the second exterior surface towards (e.g. relative to) the other one of the first exterior surface and the second exterior surface.
Paragraph 2. The wearable device of Paragraph 1, wherein the second housing part further comprises a third exterior surface connecting the first exterior surface and the second exterior surface and inclined with respect to the first outer surface and the second outer surface.
Paragraph 3. The wearable device of Paragraph 1 or Paragraph 2, wherein the second housing part comprises one or more touch sensors, wherein the one or more touch sensors are disposed along the first direction in which the second housing part extends from the first housing part, and wherein at least one of the one or more touch sensors is disposed within the second housing part between the force sensor and an inner surface of the second housing part on a rear side of the first exterior surface.
Paragraph 4. The wearable device of Paragraph 3, wherein the one or more touch sensors comprise a first touch sensor, a second touch sensor and a third touch sensor which are disposed along the first direction, wherein a surface of the first touch sensor, a surface of the second touch sensor, and a surface of the third touch sensor are disposed on the same plane, and wherein the third touch sensor is disposed between the force sensor and the inner surface of the second housing.
Paragraph 5. The wearable device of Paragraph 4, wherein the second housing part comprises an electronic component, wherein a first part of the electronic component is spaced a first distance from the plane in a second direction away from the inner surface, wherein a second part of the electronic component is spaced a second distance, greater than the first distance, in the second direction from the plane, and wherein the force sensor is disposed between the second part of the electronic component and the plane.
Paragraph 6. The wearable device of Paragraph 4 or Paragraph 5, wherein the first touch sensor is configured to obtain first sensing data related to a first area on the first external surface, wherein the second touch sensor is configured to obtain second sensing data related to a second area on the first external surface, and wherein the third touch sensor is configured to obtain third sensing data related to a third area on the first external surface.
Paragraph 7. The wearable device of Paragraph 6, wherein the wearable device comprises: memory storing instructions, comprising one or more storage media; and at least one processor comprising processing circuitry, wherein the instructions, when executed by the at least one processor individually or collectively, cause the wearable device to: identify, via the force sensor, an input at least partially on the third area and applying the force, identify, based on the input applying the force, the third sensing data obtained via the third touch sensor, and based on the third sensing data being within a reference range, perform a function related to the input, and/or based on the third sensing data being out of the reference range, ignore the input.
Paragraph 8. The wearable device of Paragraph 7, wherein the instructions, when executed by the at least one processor individually or collectively, cause the wearable device to: recognize a pressure input according to the input applying the force based on at least one of a value according to pressure data, obtained via the force sensor, being greater than a first threshold value, the third sensing data being within the reference range, a value related to the third sensing data being greater than a second threshold value, and identifying that the input applying the force is released, and; and perform the function corresponding to the pressure input.
Paragraph 9. The wearable device of Paragraph 7, wherein the instructions, when executed by the at least one processor individually or collectively, cause the wearable device to: identify, based on the first sensing data, the second sensing data, and the third sensing data, a swipe input moving along one of the first direction and a third direction opposite to the first direction, and based on identifying the swipe input, determine whether to perform the function related to the input depressing the second exterior surface with respect to the first exterior surface, wherein the input applying the force is identified after identifying the swipe input.
Paragraph 10. The wearable device of Paragraph 9, wherein the instructions, when executed by the at least one processor individually or collectively, cause the wearable device to: based on the swipe input being received during a time duration less than or equal to threshold time duration: ignore the swipe input and perform the function related to the input applying the force; and/or based on the swipe input received during time duration longer than the threshold time duration: ignore the input applying the force, and perform a function related to the swipe input.
Paragraph 11. The wearable device of Paragraph 8, wherein the function corresponding to the pressure input is set based on at least one of the number of times the pressure input occurs or a time interval between a timing when the input is identified and a timing when the input is released.
Paragraph 12. The wearable device of Paragraph 8 or Paragraph 11, wherein the instructions, when executed by the at least one processor individually or collectively, cause the wearable device to transmit, based on recognizing the pressure input and another pressure input distinct from the pressure input, a signal for causing an electronic device connected with the wearable device to execute a function for changing a first language type to a second language type.
Paragraph 13. The wearable device of Paragraph 12, wherein the wearable device comprises a microphone, and wherein the instructions, when executed by the at least one processor individually or collectively, cause the wearable device to while the function is executed in the electronic device, obtain first voice data of the first language type using the microphone, based on transmitting, to the electronic device, the first voice data of the first language type, receive second voice data of the second language type, obtained from the first voice data of the first language type, and output, via the speaker, the second voice data.
Paragraph 14. The wearable device of any one of Paragraphs 8 or 11 to 13, wherein the instructions, when executed by the at least one processor individually or collectively, cause the wearable device to: in a case where the value according to the pressure data is greater than the first threshold value and the value related to the third sensing data is less than the second threshold value, ignore the pressure input; and in a case where the value according to the pressure data is greater than the first threshold value and the value related to the third sensing data is greater than the second threshold value, perform the function corresponding to the pressure input.
Paragraph 15. The wearable device of any one of the previous Paragraphs, wherein the one or more protrusions on the first exterior surface and/or the one or more protrusions on the second exterior surface are formed to guide a touch of the user.

## Claims

1. A wearable device comprising:
a speaker; and
a housing, wherein the housing comprises:
a first housing part comprising the speaker and configured to be at least partially receivable within an ear of a user of the wearable device, and
a second housing part extending from the first housing part in a first direction,
wherein the second housing part comprises:
a first exterior surface including one or more protrusions extending along the first direction;
a second exterior surface including one or more protrusions extending along the first direction, the second exterior surface inclined relative to the first exterior surface, and
a force sensor disposed in an interior space of the second housing part and configured to identifying the second exterior surface that is depressed relative to the first exterior surface.

2. The wearable device of claim 1, wherein the second housing part further comprises a third exterior surface connecting the first exterior surface and the second exterior surface and inclined with respect to the first outer surface and the second outer surface.

3. The wearable device of any one of claim 1 or claim 2, wherein the second housing part comprises one or more touch sensors,
wherein the one or more touch sensors are disposed along the first direction in which the second housing part extends, toward an inner surface of the second housing part opposite to the first exterior surface, and
wherein at least one of the one or more touch sensors is disposed within the second housing part between the force sensor and the inner surface of the second housing part.

4. The wearable device of claim 3, wherein the one or more touch sensors comprise a first touch sensor, a second touch sensor and a third touch sensor which are disposed along the first direction,
wherein the first touch sensor, the second touch sensor, and the third touch sensor are disposed on the same plane, and
wherein the third touch sensor is disposed between the force sensor and the inner surface of the second housing.

5. The wearable device of claim 4, wherein the second housing part comprises an electronic component,
wherein a first part of the electronic component is spaced a first distance from the plane in a second direction toward the inside of the second housing part, away from the inner surface,
wherein a second part of the electronic component is spaced a second distance, greater than the first distance, in the second direction from the plane, and
wherein the force sensor is disposed between the second part of the electronic component and the plane.

6. The wearable device of any one of claim 4 or claim 5, wherein the first touch sensor is configured to obtain first sensing data related to a first area on the first external surface,
wherein the second touch sensor is configured to obtain second sensing data related to a second area on the first external surface, and
wherein the third touch sensor is configured to obtain third sensing data related to a third area on the first external surface.

7. The wearable device of claim 6, wherein the wearable device comprises:
memory storing instructions, comprising one or more storage media; and
at least one processor comprising processing circuitry,
wherein the instructions, when executed by the at least one processor individually or collectively, cause the wearable device to:
identify, via the force sensor, an input at least partially depressing the second exterior surface with respect to the first exterior surface,
identify, based on the input, the third sensing data obtained via the third touch sensor,
based on the third sensing data being within a reference range, perform a function related to the input, andbased on the third sensing data being out of the reference range, ignore the input.

8. The wearable device of claim 7, wherein the instructions, when executed by the at least one processor individually or collectively, cause the wearable device to:
recognize, based on the third sensing data within the reference range, a pressure input according to the input, and
perform the function corresponding to the pressure input.

9. The wearable device of claim 7, wherein the instructions, when executed by the at least one processor individually or collectively, cause the wearable device to:
identify, based on the first sensing data, the second sensing data, and the third sensing data, a swipe input moving along one of the first direction and a third direction opposite to the first direction, and
based on the swipe input, determine whether to perform the function related to the input depressing the second exterior surface with respect to the first exterior surface identified after the swipe input.

10. The wearable device of claim 9, wherein the instructions, when executed by the at least one processor individually or collectively, cause the wearable device to:
based on the swipe input received during time duration less than or equal to threshold time duration:
ignore the swipe input, and
perform the function related to the input.

11. The wearable device of claim 10, wherein the instructions, when executed by the at least one processor individually or collectively, cause the wearable device to:
based on the swipe input received during time duration longer than the threshold time duration:
ignore the input, and
perform a function related to the swipe input.

12. The wearable device of claim 7, wherein the instructions, when executed by the at least one processor individually or collectively, cause the wearable device to recognize the pressure input based on identifying that the input depressing the second exterior surface with respect to the first exterior surface is released.

13. The wearable device of claim 12, wherein the function corresponding to the pressure input is set based on at least one of the number of times the pressure input occurs or a time interval between a timing when the input is identified and a timing when the input is released.

14. A method performed by a wearable device, comprising:
identifying, via a force sensor of the wearable device, an input depressing a second exterior surface of the wearable device with respect to a first exterior surface of the wearable device, the second exterior inclined relative to the first exterior surface,
identifying, based on the input depressing the second exterior surface with respect to the first exterior surface, sensing data obtained via one of a plurality of touch sensors,
based on the sensing data within a reference range, performing a function related to the input, and
based on the third sensing data out of the reference range, ignoring the input.

15. Non-transitory computer readable storage medium storing one or more programs, wherein the one or more programs include instructions which, when executed by at least one processor of a wearable device with a force sensor and a plurality of touch sensors, cause the wearable device to:
identify, via the force sensor, an input depressing a second exterior surface of the wearable device with respect to a first exterior surface of the wearable device, the second exterior inclined relative to the first exterior surface,
identify, based on the input depressing the second exterior surface with respect to the first exterior surface, sensing data obtained via one of a plurality of touch sensors,
based on the sensing data within a reference range, perform a function related to the input, and
based on the third sensing data out of the reference range, ignore the input.
